# EUROPEAN PATENT SPECIFICATION

(11) **EP 3 396 510 B1**
(45) Date of publication and mention of the grant of the patent: **03.06.2020**
(21) Application number: 16878397.5
(22) Date of filing: 08.12.2016
(51) Int. Cl.: G06F 3/0481, G09G 5/00, G09G 5/10, G09G 5/377, G06F 3/14, H04N 21/431, G06T 1/00, H04N 21/41

(54) **IMAGE PROCESSING DEVICE, IMAGE DISPLAY METHOD, AND PROGRAM**
BILDVERARBEITUNGSVORRICHTUNG, BILDANZEIGEVERFAHREN UND PROGRAMM
DISPOSITIF DE TRAITEMENT D'IMAGE, PROCÉDÉ D'AFFICHAGE D'IMAGE ET PROGRAMME

(30) Priority: 25.12.2015 JP 2015253020; 25.10.2016 JP 2016209023
(43) Date of publication of application: 31.10.2018
(73) Proprietor: Ricoh Company, Ltd., Tokyo 143-8555 (JP)
(72) Inventor: KATO, Yoshinaga, Tokyo 143-8555 (JP); KASATANI, Kiyoshi, Tokyo 143-8555 (JP)
(74) Representative: SSM Sandmair
(86) International application number: PCT/JP2016/086581
(87) International publication number: WO 2017/110505

(56) References cited:
- EP-A1- 1 981 274
- JP-A- 2010 102 267
- JP-A- 2015 501 023
- US-A1- 2004 230 990
- US-A1- 2010 259 560
- US-A1- 2014 176 562
- US-A1- 2015 091 940

## Description

### [Technical Field]

The present invention relates to an image processing apparatus, an image display method, and a program.

### [Background Art]

An electronic blackboard with a touch panel mounted on a large flat panel display is known. The electronic blackboard displays a screen that plays a role of a blackboard, detects coordinates contacted by an instructing body such as an electronic pen or a finger, via the touch panel, and draws the trajectory of the coordinates as handwritten contents on the screen. Therefore, the user can use the screen like a blackboard.

Also, with an electronic blackboard that can be connected to a personal computer, the same screen as the personal computer can be displayed on a display and handwritten contents can be superimposed and drawn (for example, see Patent Document 1). Patent Document 1 discloses a display apparatus that converts a moving image transmitted from an external information processing apparatus into image data to store and redisplay the image data.

An electronic blackboard includes a function to obtain (capture) a visual image displayed on a display, and can obtain not only a handwritten content but also a visual image input from a PC as a still image.

US 2015/0091940 A1 discloses An image processing apparatus having a display device displaying a background image and a stroke image superimposed on the background image, the stroke image reproducing a stroke which is drawn by an input operation of a user, includes a recording unit recording image data of the background image and stroke data, which are related to the stroke input by the input operation, into an electronic document; a read unit reading the electronic document; a display unit displaying the background image on the display device by using the image data of the background data, reproducing the stroke image by using the stroke data, and displaying the stroke image superimposed on the background image on the display device; and an edit unit editing the stroke data in accordance with the input operation.

### [Summary of the Invention]

### [Technical Problem]

However, there is a problem that there is a case in which it is impossible to obtain a visual image, desired by a participant of a conference, from a visual image displayed on a display of an electronic blackboard. A specific example will be described in the following.

First, when an electronic blackboard is used, there is a request to display a semitransparent image independently from a visual image from a PC or the like. For example, if the electronic blackboard displays a semitransparent image, it becomes possible for the participant of a conference or the like to view handwritten contents etc. while viewing the semitransparent image. If characters such as "Confidential" or "Private" are described in the semitransparent image, a participant or the like can always grasp that information being displayed on the display is highly confidential.

However, if a semitransparent image is always displayed, the semitransparent image may obstruct a participant. Thus, there may be a case in which it is difficult for the participant to specify a visual image of the PC desired to be obtained as a still image. For example, in a case where characters such as "Confidential" overlap on a location of a visual image of a PC desired to be viewed by a participant, it is difficult for the participant to check whether to be allowed to obtain the visual image of the PC.

In view of the above-described problem, the present invention has an object to provide an electronic blackboard that is able to suppress a decrease of the visibility of an image being displayed.

### [Solution to Problem]

In view of the problem described above, according to one embodiment of the present invention, an image processing apparatus according to claim 1 for displaying an input visual image input from an external device is defined.

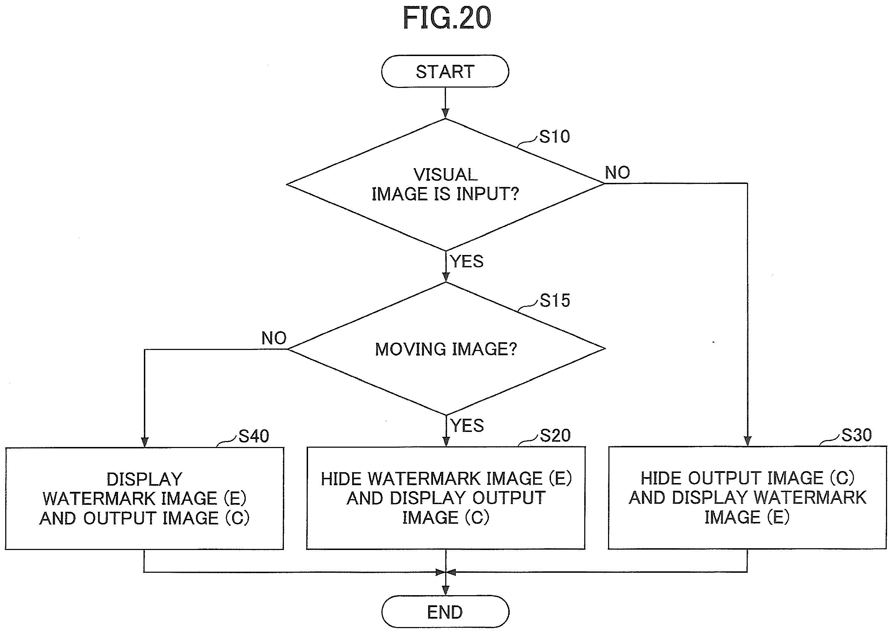

Enabling disclosure for the invention is found in the embodiment of Figure 20. Other embodiments which do not include all features claimed are to be understood as examples.

### [Effects of the Invention]

It is possible to provide an image processing apparatus that can suppress a decrease of the visibility of an image being displayed.

### [Brief Description of the Drawings]

FIG. 1A is a diagram describing an example of an overview of an operation of an electronic blackboard;
FIG. 1B is a diagram describing an example of an overview of an operation of an electronic blackboard;
FIG. 1C is a diagram describing an example of an overview of an operation of an electronic blackboard;
FIG. 1D is a diagram describing an example of an overview of an operation of an electronic blackboard;
FIG. 2 is an example of an overall configuration diagram of an image processing system;
FIG. 3 is an example of a hardware configuration diagram of an electronic blackboard;
FIG. 4 is an example of a functional block diagram of the electronic blackboard;
FIG. 5 is an example of a functional block diagram of a file processing unit;
FIG. 6 is an example of a functional block diagram of a server unit and a client unit;
FIG. 7 is an example of a configuration diagram of image layers;
FIG. 8 is an example of a sequence diagram illustrating a process by the electronic blackboards;
FIG. 9 is an example of a sequence diagram illustrating a process by the electronic blackboards;
FIG. 10A is a diagram describing an example of a screen that is displayed at the time of uploading a watermark image;
FIG. 10B is a diagram describing an example of a screen that is displayed at the time of uploading a watermark image;
FIG. 11A is a diagram illustrating an example of a watermark image;
FIG. 11B is a diagram illustrating an example of a watermark image;
FIG. 12 is an example of a flowchart that describes a method of setting transparency;
FIG. 13A is a diagram illustrating an example of a screen for setting transparency;
FIG. 13B is a diagram illustrating an example of a screen for setting transparency;
FIG. 14 is an example of a flowchart illustrating a control procedure of whether to enable or disable a watermark image by a watermark image generating unit;
FIG. 15 is a diagram illustrating an example of an enabling/disabling setting screen in which a watermark image is set to be enabled/disabled;
FIG. 16 is an example of a flowchart illustrating a control procedure of whether to enable or disable a watermark image by a watermark image generating unit;
FIG. 17 is an example of a flowchart illustrating a procedure for switching a watermark image (E) to be displayed or hidden in accordance with the presence/absence of input of a visual image by a layout managing unit;
FIG. 18A is an example of a flowchart illustrating an operation when an operation of acquiring a still image is performed when a visual image is being input;
FIG. 18B is a diagram illustrating an example of an image displayed on the display;
FIG. 18C is a diagram illustrating an example of an images displayed on the display;
FIG. 19A is a diagram illustrating an example of an operation of the electronic blackboard at the time of obtaining a still image;
FIG. 19B is a diagram illustrating an example of an operation of the electronic blackboard at the time of obtaining a still image;
FIG. 19C is a diagram illustrating an example of an operation of the electronic blackboard at the time of obtaining a still image; and
FIG. 20 is a variation example of a flowchart illustrating a procedure for switching a watermark image (E) to be displayed or hidden in accordance with the presence/absence of input of a visual image by the layout managing unit.

### [Mode for Carrying out the Invention]

In the following, an electronic blackboard 2, which is an example of an apparatus according to an embodiment for implementing the present invention, and an image display method that is performed by the electronic blackboard 2 will be described with reference to the drawings.

### <Overview of system>

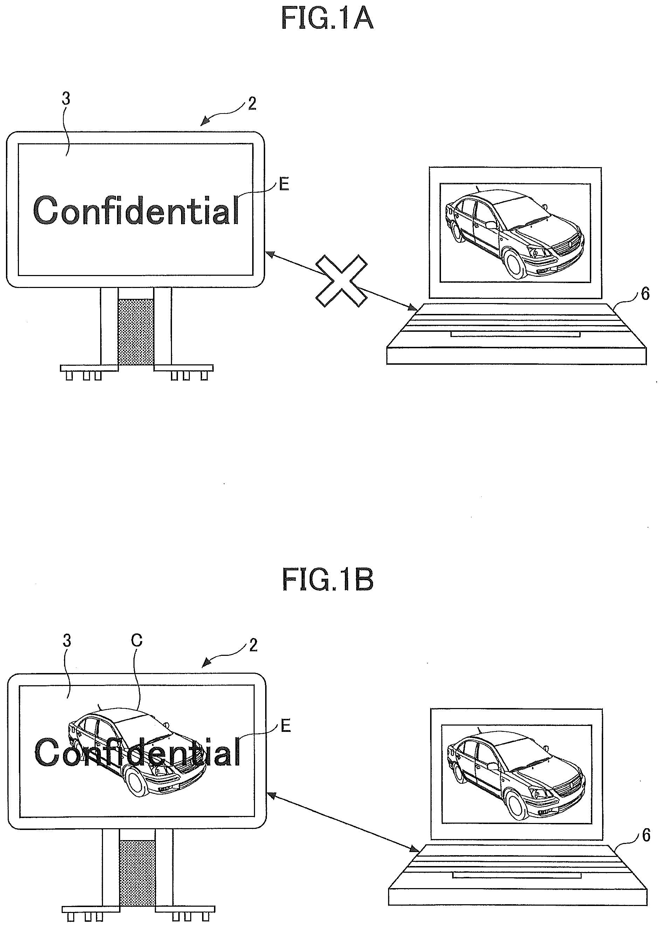

FIG. 1A to FIG. 1D are diagrams illustrating an example of schematic operations of the electronic blackboard 2 according to a present embodiment. FIG. 1A illustrates a state in which a notebook PC 6 (Personal Computer), which serves as an external device with respect to the electronic blackboard 2, is not being connected to the electronic blackboard 2. The notebook PC 6 displays a visual image on its display, but this visual image is not output to the electronic blackboard 2. The electronic blackboard 2 includes a function to display a semitransparent image (hereinafter referred to as a watermark image), and uses the watermark image to display characters "Confidential". Because the watermark image (the characters "Confidential") is translucent, a participant of a conference and the like (in the following, may be referred to as a user in the meaning of a person who uses the electronic blackboard 2) can view various kinds of information being displayed on the display 3.

For example, when confidential information is disclosed in a presentation or the like, there may be a case in which it is difficult for a presenter to sign a non-disclosure agreement (NDA) with participant(s). In such a case, if "Confidential" is displayed on the electronic blackboard 2, it is presumed that the presenter and the participants sign a non-disclosure agreement. Therefore, this has an advantage that the presentation or the like can be performed smoothly.

It should be noted that FIG. 1B illustrates an operation of a comparative example compared with the electronic blackboard 2 according to the present embodiment. FIG. 1B illustrates a state in which the notebook PC 6 and the electronic blackboard 2 are being connected. As illustrated in FIG. 1B, the visual image displayed on the display 3 by the notebook PC 6 (which is referred to as an output image (C)) is output to the display 3. Although the watermark image (E) is in front of the visual image of the notebook PC 6, because the watermark image (E) is semitransparent, the user can view the visual image of the notebook PC 6 through the watermark image. However, on the display 3 of the electronic blackboard 2, because the characters "Confidential" are continuously displayed, the visibility of the visual image of the notebook PC 6 decreases. For example, when the notebook PC 6 causes the display 3 to display a moving image, because the visual image changes with time, the portion where the characters "Confidential" overlap with the visual image also changes with time. Because the user views the change as a moving image and the change in the overlapping portion between the watermark image and the moving image, it is difficult for the user to grasp timing to obtain the visual image of the notebook PC 6.

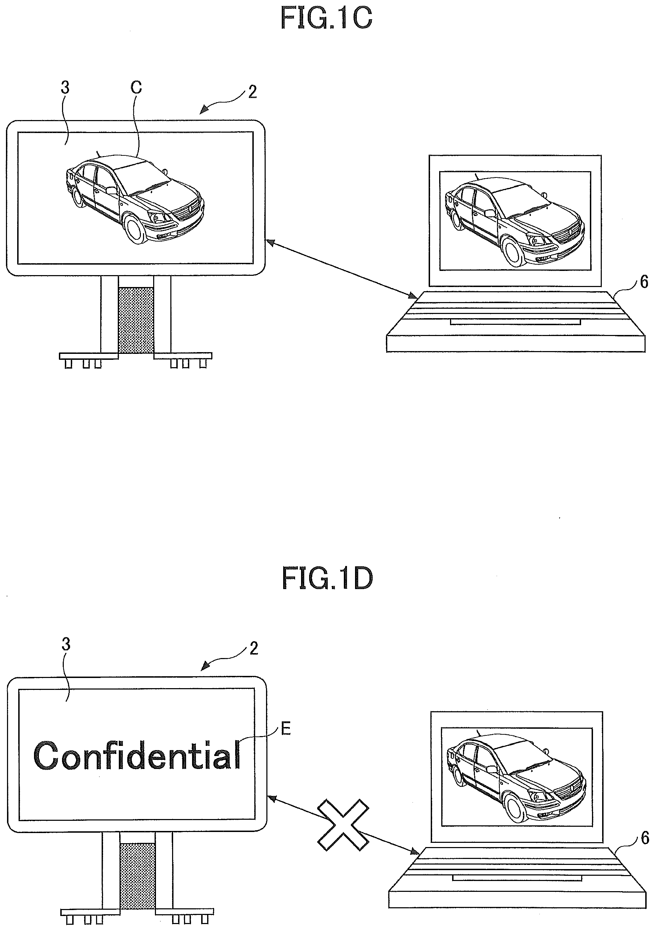

FIG. 1C is a diagram describing an operation when the electronic blackboard 2 of the present embodiment displays a visual image of the notebook PC 6. The electronic blackboard 2 to which the visual image from the notebook PC 6 is input switches the watermark image (E) to be hidden. Thereby, as illustrated in FIG. 1C, the characters "Confidential" are not displayed on the display 3. Because the visual image of the notebook PC 6 does not overlap with the characters "Confidential", the user can obtain the visual image of the notebook PC 6 as a still image at timing when the visual image desired to be stored as a still image is displayed.

FIG. 1D is a diagram describing an operation when the electronic blackboard 2 of the present embodiment does not display a visual image of the notebook PC 6. The electronic blackboard 2 to which the visual image is not input from the notebook PC 6 displays the watermark image (E) on the display 3. Without a user's operation, displaying and non-displaying the watermark (E) can be switched depending on whether an input of a visual image of the notebook PC 6 is present or absent.

As described above, when a visual image (an input visual image) is not being input from the notebook PC 6, the electronic blackboard 2 displays, on the display 3, a first image (which is, for example, a watermark image such as characters "Confidential") stored (in advance) in the electronic blackboard 2. In this case, the visual image of the notebook PC 6 is not displayed on the display 3. Also, as will be described later below with reference to FIG. 20 and the like, when a visual image (an input visual image) input from the notebook PC 6 does not satisfy a predetermined condition, the electronic blackboard 2 displays, on the display 3, the visual image input from the notebook PC 6 without displaying a first image (which is a watermark image such as characters "Confidential"), and when the visual image (the input visual image) input from the notebook PC 6 satisfies the predetermined condition, the electronic blackboard 2 displays, on the display 3, the first image (which is a watermark image such as characters "Confidential") and the visual image input from the notebook PC 6. Note that for example, as illustrated in FIG. 20, when the visual image input from the notebook PC 6 is a moving image, the predetermined condition is not satisfied. For example, when the visual image input from the notebook PC 6 is not a moving image, the predetermined condition is satisfied.

In this way, the electronic blackboard 2 can control a watermark image to be displayed or not to be displayed. Thereby, the electronic blackboard 2 can utilize the watermark image when a visual image of the notebook PC 6 is not being input, and the electronic blackboard 2 can display the visual image of the notebook PC 6 with high image quality when the visual image of the notebook PC 6 is being input.

### <Terminology>

In a scope of claims, an external device may be a device external to the electronic blackboard 2, and means a device that can be connected via a cable, a network, or an interface. For example, the notebook PC 6 and a device equivalent to this are examples of the external device. A portable storage medium also corresponds to an external device.

An image processing apparatus is an apparatus for displaying an image. The above described electronic blackboard 2 is an example of the image processing apparatus. The image processing apparatus may include a display, or may use a projector to project an image. According to the present embodiment, the image processing apparatus will be described with the term of the electronic blackboard 2.

A display part means a unit, such as a display or a projector, that displays an image. In a case where an image processing apparatus includes a display, the display is a display part that is able to display an image (a first image) such as characters "Confidential" stored (in advance) in the image processing apparatus and an image (a second image) input from an external device such as the notebook PC 6). In a case where an image processing apparatus uses a projector to project an image, a portion where the image is to be projected (a plane where the image is to be projected) is a display part.

### <Overview of system>

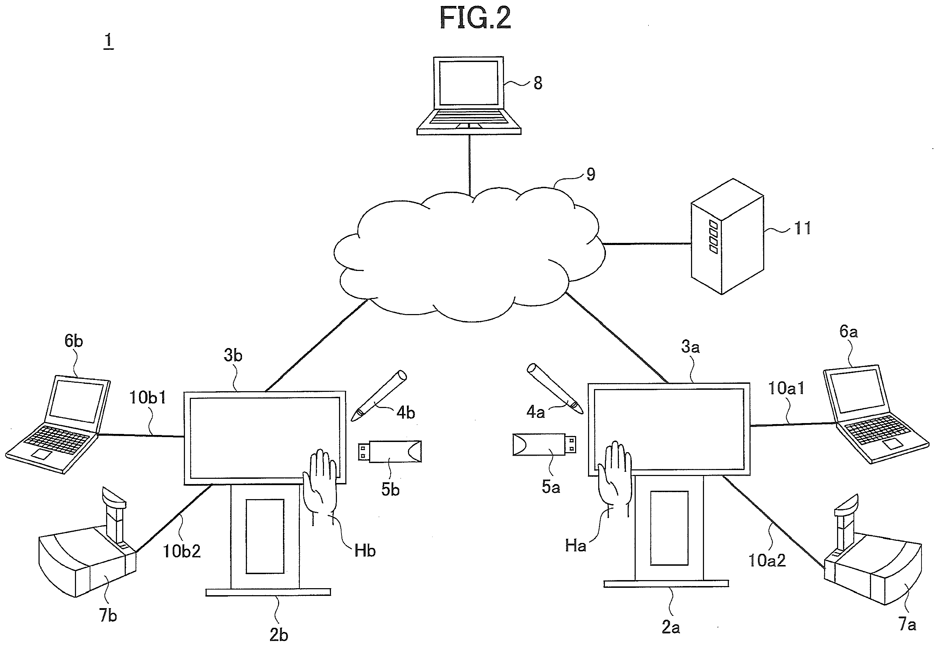

FIG. 2 is an overall configuration diagram of an image processing system 1according to the present embodiment. Note that in FIG. 2, for the sake of simplifying the descriptions, only two electronic blackboards 2a and 2b and two electronic pens 4a and 4b, etc., respectively associated with the electronic blackboards are illustrated; however, three or more electronic blackboards and electronic pens, etc., may be used.

As illustrated in FIG. 2, the image processing system 1 includes the plurality of electronic blackboards 2a and 2b, the plurality of electronic pens 4a and 4b, Universal Serial Bus (USB) memories 5a and 5b, notebook personal computers (PCs) 6a and 6b, TV (video) conference terminals 7a and 7b, and a PC 8. Further, the electronic blackboards 2a and 2b and the PC 8 are communicably connected via a communication network 9. Furthermore, the plurality of electronic blackboards 2a and 2b are provided with displays 3a and 3b, respectively.

Further, the electronic blackboard 2a may display, on the display 3a, an image drawn according to an event generated by the electronic pen 4a (the pen tip of the electronic pen 4a or the pen bottom of the electronic pen 4a touching the display 3a). Note that the electronic blackboard 2a may change an image displayed on the display 3a, not only based on an event generated by the electronic pen 4a, but also based on an event generated by a hand Ha of the user, etc. (a gesture such as enlargement, reduction, and page turning, etc.).

Further, the USB memory 5a can be connected to the electronic blackboard 2a. The electronic blackboard 2a can read electronic files such as a PDF file from the USB memory 5a, and the electronic blackboard 2a can record electronic files in the USB memory 5a. Further, to the electronic blackboard 2a, the notebook PC 6a is connected via a cable 10a1 capable of communication according to standards such as DisplayPort (registered trademark), Digital Visual Interface (DVI), High-Definition Multimedia Interface (HDMI) (registered trademark), and Video Graphics Array (VGA). Then, the electronic blackboard 2a generates an event according to a touch on the display 3a, and transmits event information indicative of the generated event to the notebook PC 6a, similar to an event from an input device such as a mouse or a keyboard. Similarly, to the electronic blackboard 2a, the TV (video) conference terminal 7a is connected via a cable 10a2 capable of communication according to the above standards. Note that the notebook PC 6a and the TV (video) conference terminal 7a may communicate with the electronic blackboard 2a through wireless communication compliant with various wireless communication protocols such as Bluetooth (registered trademark).

On the other side, at another site where the electronic blackboard 2b is installed, similar to the above, the electronic blackboard 2b having the display 3b, the electronic pen 4b, the USB memory 5b, the notebook PC 6b, the TV (video) conference terminal 7b, a cable 10b1, and a cable 10b2 are used. Furthermore, it is also possible to change the image displayed on the display 3b based on an event generated by the user's hand Hb, etc.

Accordingly, an image drawn on the display 3a of the electronic blackboard 2a at one site is also displayed on the display 3b of the electronic blackboard 2b at another site. Conversely, an image drawn on the other display 3b of the electronic blackboard 2b at the other site is also displayed on the display 3a of the electronic blackboard 2a at one site. As described above, the image processing system 1 can perform a remote sharing process of sharing the same image at remote locations, and therefore the image processing system 1 is highly convenient when used for a conference held at remote locations, etc.

Note that in the following description, when any electronic blackboard 2 is indicated among a plurality of electronic blackboards 2, the electronic blackboard is referred to as the "electronic blackboard 2". When any display is indicated among a plurality of displays, the display is referred to as the "display 3". When any electronic pen is indicated among a plurality of electronic pens, the electronic pen is referred to as the "electronic pen 4". When any USB memory is indicated among a plurality of USB memories, the USB memory is referred to as the "USB memory 5". When any notebook PC 6 is indicated among a plurality of notebook PCs 6, the notebook PC is referred to as the "notebook PC 6". When any TV (video) conference terminal is indicated among a plurality of TV (video) conference terminals, the TV (video) conference terminal is referred to as the "TV (video) conference terminal 7". Furthermore, when any hand is indicated among the hands of a plurality of users, the hand is referred to as the "hand H". When any cable is indicated among a plurality of cables, the cable is referred to as the "cable 10".

Furthermore, in the present embodiment, an electronic blackboard 2 is described as an example of an image processing apparatus; however, the image processing apparatus is not limited as such. Other examples of the image processing apparatus are an electronic signboard (digital signage), a telestrator used for sports and weather forecasts, etc., or a remote image (visual image) diagnostic device, etc. Furthermore, although the notebook PC 6 will be described as an example of the information processing terminal; the information processing terminal is not limited as such. Other examples of the information processing terminal are terminals capable of supplying image frames such as a desktop PC, a tablet PC, a PDA, a digital video camera, a digital camera, and a game console. Furthermore, the communication network includes the Internet, a Local Area Network (LAN), and a mobile phone communication network, etc. Furthermore, in the present embodiment, although a USB memory is described as an example of a recording medium; the recording medium is not limited as such. Other examples of the recording medium are various kinds of recording media such as a SD card.

### <Hardware configuration of electronic blackboard 2>

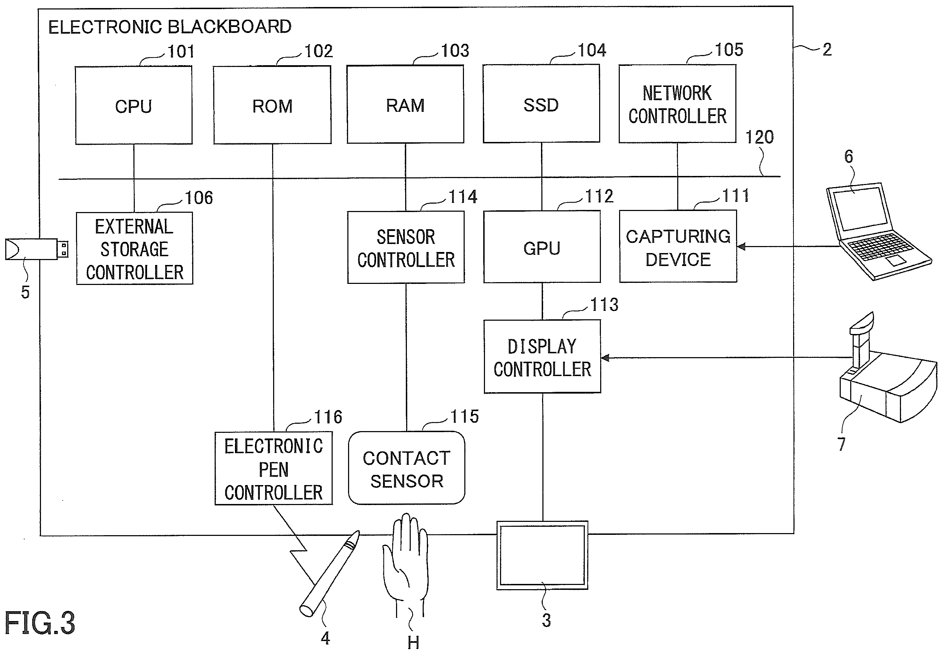

Next, with reference to FIG. 3, a hardware configuration of the electronic blackboard 2 of the present embodiment will be described. Note that FIG. 3 is a hardware configuration diagram of the electronic blackboard 2.

As illustrated in FIG. 3, the electronic blackboard 2 includes a Central Processing Unit (CPU) 101 for controlling the operations of the entire electronic blackboard 2, a Read-Only Memory (ROM) 102 storing programs used for driving the CPU 101 such as an Initial Program Loader (IPL), a Random Access Memory (RAM) 103 used as a work area of the CPU 101, a Solid State Drive (SSD) 104 for storing various kinds of data such as a program for the electronic blackboard 2, a network controller 105 for controlling communication with the communication network 9, and an external storage controller 106 for controlling communication with the USB memory 5.

Furthermore, the electronic blackboard 2 includes a capturing device 111 for displaying visual image information as a still image or a moving image on the display of the notebook PC 6, a Graphics Processing Unit (GPU) 112 that is specifically used for graphics, and a display controller 113 for implementing control and managing the screen display for outputting output images from the GPU to the display 3 and the TV (video) conference terminal 7.

The electronic blackboard 2 further includes a sensor controller 114 for controlling the process of a contact sensor 115, and the contact sensor 115 for detecting that the electronic pen 4 or the user's hand H has touched the display 3. The contact sensor 115 performs input of coordinates and detection of coordinates according to an infrared ray blocking method. In the method of inputting the coordinates and detecting the coordinates, two light receiving/emitting devices, which are installed at both upper end portions of the display 3, emit a plurality of infrared rays parallel with the display 3, the infrared rays are reflected by reflecting members arranged around the display 3, and receiving elements receive the infrared rays that have returned along the same optical paths as the optical paths of the light that has been emitted. The contact sensor 115 outputs, to the sensor controller 114, the identification (ID) of the infrared rays, which are emitted by the two light emitting/receiving devices and blocked by an object, and the sensor controller 114 identifies the coordinate position that is the contact position of the object. Note that all of the following IDs are examples of identification information. An example of the object is a finger and the electronic pen 4; however, the object may be any object that blocks light.

Furthermore, the contact sensor 115 is not limited to the infrared ray blocking method, but may be various kinds of detection means such as a capacitive type touch panel that identifies the contact position by detecting a change in electrostatic capacity, a resistive film type touch panel that identifies the contact position by a change in the voltage of two opposing resistive films, and an electromagnetic induction type touch panel for detecting the electromagnetic induction caused by the contact of the contact object with the display part to identify the contact position. Furthermore, the electronic blackboard 2 is provided with an electronic pen controller 116. The electronic pen controller 116 communicates with the electronic pen 4 to determine whether the pen tip or the pen bottom of the electronic pen 4 has touched the display 3. Note that the electronic pen controller 116 may not only determine whether the pen tip or the pen bottom of the electronic pen 4 has touched the display 3, but may also determine whether the part of the electronic pen 4 held by the user or other parts of the electronic pen have touched the display 3.

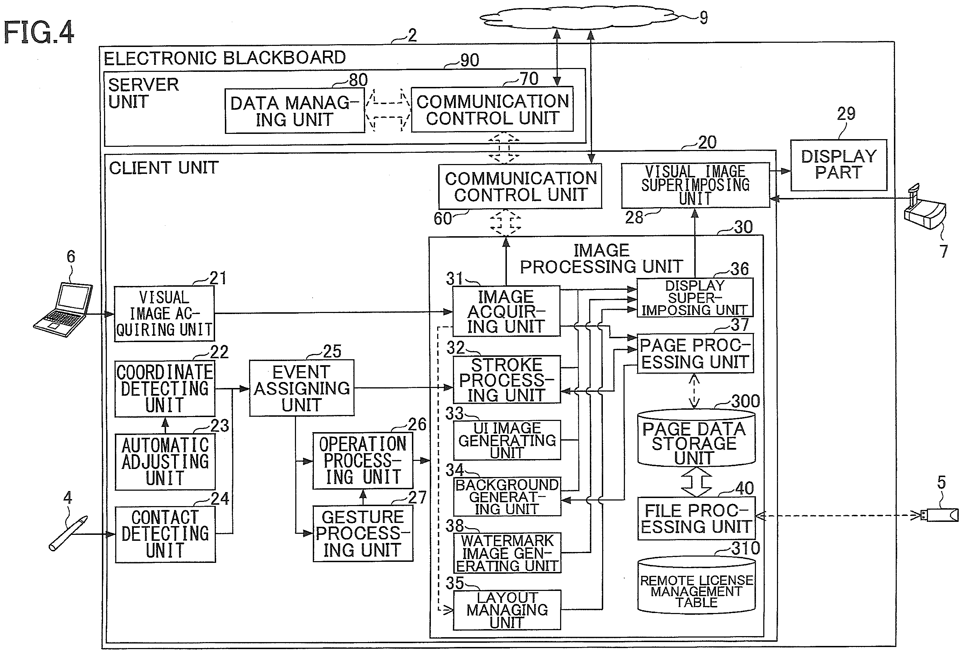

Furthermore, the electronic blackboard 2 includes a bus line 120 such as an address bus and a data bus, etc., for electrically connecting the CPU 101, the ROM 102, the RAM 103, the SSD 104, the network controller 105, the external storage controller 106, the capturing device 111, the GPU 112, the sensor controller 114, and the electronic pen controller 116, as illustrated in FIG. 4.

Note that a program for the electronic blackboard 2 may be distributed after being recorded in a computer-readable recording medium such as a Compact Disk Read-Only Memory (CD-ROM).

### <Functional configuration of electronic blackboard 2>

Next, a functional configuration of the electronic blackboard 2 will be described with reference to FIGS. 4 through 7. Note that first, the overall functional configuration of the electronic blackboard 2 will be described with reference to FIG. 4. FIG. 4 is a functional block diagram of the electronic blackboard 2.

The electronic blackboard 2 has the functional configuration illustrated in FIG. 4, according to the hardware configuration illustrated in FIG. 4 and programs. The electronic blackboard 2 can be a "hosting device" that initially starts a remote sharing process, and the electronic blackboard 2 can also be a "participating device" that participates later in the remote sharing process already started. Furthermore, the electronic blackboard 2 is broadly formed of both a client unit 20 and a server unit 90. The client unit 20 and the server unit 90 are functions implemented in one casing of the electronic blackboard 2. In a case where the electronic blackboard 2 serves as a hosting device, the client unit 20 and the server unit 90 are implemented in this electronic blackboard 2. In a case where the electronic blackboard 2 serves as a participating device, in this electronic blackboard 2, the client unit 20 is implemented; however, the server unit 90 is not implemented. That is, in FIG. 3, when the electronic blackboard 2a is a hosting device and the electronic blackboard 2b is a participating device, the client unit 20 of the electronic blackboard 2a communicates, via the server unit 90 implemented in the same electronic blackboard 2a, with the client unit 20 of the other electronic blackboard 2b. On the other side, the client unit 20 of the electronic blackboard 2b communicates with the client unit 20 of the other electronic blackboard 2a, via the server unit 90 implemented in the other electronic blackboard 2a.

### [Functional configuration of client unit 20]

Next, a functional configuration of the client unit 20 will be described mainly with reference to FIGS. 4 through 7. The client unit 20 includes a visual image acquiring unit 21, a coordinate detecting unit 22, an automatic adjusting unit 23, a contact detecting unit 24, an event assigning unit 25, an operation processing unit 26, a gesture processing unit 27, a visual image superimposing unit 28, an image processing unit 30, and a communication control unit 60.

Among these elements, the visual image acquiring unit 21 acquires an output image of a visual image output device connected to the cable 10. Upon receiving an image signal from a visual image output device, the visual image acquiring unit 21 analyzes the image signal to derive the resolution of the image frame that is the display image of the visual image output device formed by the image signal, and to derive image information such as the frequency of updating the image frame, and outputs this information to an image acquiring unit 31.

The coordinate detecting unit 22 detects a coordinate position of an event caused by the user on the display 3 (such as an action of the user's hand H touching the display 3). The coordinate detecting unit 22 also detects a touched area.

The automatic adjusting unit 23 is activated when the electronic blackboard 2 is activated (when the electronic blackboard 2 is restarted), and adjusts parameters used when processing images of a sensor camera by the coordinate detecting unit 22 that detects coordinates by an optical sensor method, so that the coordinate detecting unit 22 can output an appropriate value.

The contact detecting unit 24 detects an event caused by the user (an action in which the pen tip of the electronic pen 4 or the pen bottom of the electronic pen 4 is pressed on (touches) the display 3) .

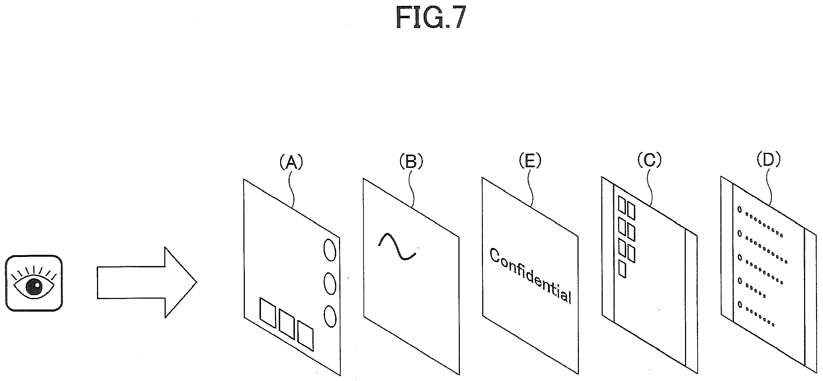

The event assigning unit 25 assigns a coordinate position of an event detected by the coordinate detecting unit 22 and a detection result detected by the contact detecting unit 24, to respective events of stroke drawing, a UI operation, and a gesture operation. Here, the "stroke drawing" is an event in which, when a stroke image (B) that will be described later below and illustrated in FIG. 7 is being displayed on the display 3, the user presses down the electronic pen 4 on the display 3, moves the electronic pen 4 in the pressed state, and finally releases the electronic pen 4 from the display 3. By this stroke drawing, for example, alphabetical letters such as "S" and "T" are drawn on the display 3. Note that this "stroke drawing" does not only include drawing an image, but also includes events of erasing an image already drawn or editing a drawn image.

The "UI operation" is an event in which the user presses a predetermined position with the electronic pen 4 or the hand H when a UI image (A) that will be described later below and illustrated in FIG. 7 is being displayed on the display 3. By this UI operation, for example, the color or width of lines drawn by the electronic pen 4 are set.

The "gesture operation" is an event in which the user touches the display 3 with the hand H or moves the hand H on the display 3, when a stroke image (B) that will be described later below and illustrated in FIG. 7 is being displayed on the display 3. By this gesture operation, for example, it is possible to enlarge (or reduce) an image, change the display area, or switch pages, etc., by moving the hand H while the user is touching the display 3 with the hand H.

The operation processing unit 26 executes various operations according to UI elements for which an event has occurred, among events determined as UI operations by the event assigning unit 25. Examples of the UI elements include buttons, lists, check boxes, and text boxes. The gesture processing unit 27 executes an operation corresponding to an event determined to be a gesture operation by the event assigning unit 25.

The visual image superimposing unit 28 displays an image superimposed by a later-described display superimposing unit 36, as a visual image, on a display part 29. The display part 29 has a display function implemented by the display 3. Furthermore, the visual image superimposing unit 28 performs a picture-in-picture operation to superimpose, on a visual image from a visual image output device (such as the notebook PC 6), a visual image transmitted from another visual image output device (such as the TV (video) conference terminal 7). Furthermore, the visual image superimposing unit 28 performs a switching operation such that a visual image acquired by the picture-in-picture operation and displayed on a part of the display part 29 is displayed on the entire display part 29.

The image processing unit 30 performs a process of superimposing the respective image layers, etc., as illustrated in FIG. 7. The image processing unit 30 includes the image acquiring unit 31, a stroke processing unit 32, a UI image generating unit 33, a background generating unit 34, a watermark image generating unit 38, a layout managing unit 35, the display superimposing unit 36, a page processing unit 37, a file processing unit 40, a page data storage unit 300, and a remote license management table 310.

Among these elements, the image acquiring unit 31 acquires each frame as an image from the visual image acquired by the visual image acquiring unit 21. The image acquiring unit 31 outputs data of this image to the page processing unit 37. This image corresponds to an output image (C) from the visual image output device (the notebook PC 6, etc.) illustrated in FIG. 7.

The stroke processing unit 32 draws an image, erases the drawn image, and edits the drawn image, based on an event related to the stroke drawing assigned by the event assigning unit 25. The image created by stroke drawing corresponds to the stroke image (B) illustrated in FIG. 7. Furthermore, the results of drawing, erasing, and editing of images based on the stroke drawing, are stored in an operation data storage unit 840 as operation data that will be described later below.

The UI image generating unit 33 generates a User Interface (UI) image set in advance in the electronic blackboard 2. This UI image corresponds to the UI image (A) illustrated in FIG. 7.

The background generating unit 34 receives, from the page processing unit 37, media data of page data read from the page data storage unit 300 by the page processing unit 37. The background generating unit 34 outputs the received media data to the display superimposing unit 36. Furthermore, an image based on this media data corresponds to a background image (D) illustrated in FIG. 7. A pattern of the background image (D) is plain or a grid display, etc.

The watermark image generating unit 38 outputs, to the display superimposing unit 36, watermark image data stored in the page data storage unit 300, which serves as a storage unit of the electronic blackboard 2. This watermark image data corresponds to the watermark image (E) that is illustrated in FIG. 7. Although details of a watermark image will be described later below, the watermark image generating unit 38 generates watermark image data by performing a process such as a process of causing the watermark image data of the page data storage unit 300 to match a resolution and an aspect ratio of the display 3. The transparency may be held in the watermark image data in advance, or may be set by a user on the electronic blackboard 2. In other words, the watermark image data related to a watermark image (E) may include at least information related to the transparency of the watermark image (E).

The layout managing unit 35 manages, with respect to the display superimposing unit 36, layout information indicative of the layout of each image output from the image acquiring unit 31, the stroke processing unit 32, the UI image generating unit 33 (or the background generating unit 34), and the watermark image generating unit 38. Accordingly, the layout managing unit 35 is able to send an instruction to the display superimposing unit 36, as to the positions of displaying the output image (C), the stroke image (B), and the watermark image (E), in the UI image (A) and the background image (D), or to not display the output image (C), the stroke image (B), and the watermark image (E).

Based on the layout information output from the layout managing unit 35, the display superimposing unit 36 lays out (superimposes) each image output from the image acquiring unit 31, the stroke processing unit 32, the UI image generating unit 33 (the background generating unit 34), and the watermark image generating unit 38.

The page processing unit 37 integrates the data of the stroke image (B) and the data of the output image (C) into a single set of page data, and stores the page data in the page data storage unit 300. The data of the stroke image (B) forms part of the page data, as stroke arrangement data (each stroke data) indicated by a stroke arrangement data ID illustrated in FIG. 7. The data of the output image (C) forms part of the page data, as media data indicated by a media data ID illustrated in FIG. 7. Then, when this media data is read from the page data storage unit 300, the media data is handled as data of the background image (D).

Furthermore, the page processing unit 37 transmits the media data of the temporarily stored page data, to the display superimposing unit 36 via the background generating unit 34. Accordingly, the visual image superimposing unit 28 can redisplay the background image (D) on the display 3. Furthermore, the page processing unit 37 can return the stroke arrangement data (each stroke data) of the page data, to the stroke processing unit 32, such that the stroke can be reedited. Furthermore, the page processing unit 37 can erase or duplicate the page data.

That is, the data of the output image (C) displayed on the display 3 at the time point when the page processing unit 37 stores the page data in the page data storage unit 300, is temporarily stored in the page data storage unit 300, and subsequently, when being read from the page data storage unit 300, the data is read as media data indicative of the background image (D). Then, the page processing unit 37 outputs the stroke arrangement data indicative of the stroke image (B), within the page data read from the page data storage unit 300, to the stroke processing unit 32. Furthermore, the page processing unit 37 outputs the media data indicative of the background image (D), within the page data read from the page data storage unit 300, to the background generating unit 34.

Further, the page processing unit 37 sends the watermark image data stored in the page data storage unit 300 to the watermark image generating unit 38. The watermark image generating unit 38 transmits the watermark image to the display superimposing unit 36.

The display superimposing unit 36 superimposes the output image (C) from the image acquiring unit 31, the stroke image (B) from the stroke processing unit 32, the UI image (A) from the UI image generating unit 33, the background image (D) from the background generating unit 34, and the watermark image (E) from the watermark image generating unit 38, in accordance with a layout designated by the layout managing unit 35. Accordingly, as illustrated in FIG. 7, the respective layers of the UI image (A), the stroke image (B), the watermark image (E), the output image (C), and the background image (D) are superimposed in an order in which the user can see the images even if the images overlap each other.

Furthermore, the display superimposing unit 36 can switch the output image (C) and the background image (D) illustrated in FIG. 7 to be exclusively superimposed with the UI image (A), the stroke image (B), and the watermark image (E). For example, in a case where the cable 10 between the electronic blackboard 2 and the visual image output device (the notebook PC 6, etc.) is pulled out while the UI image (A), the stroke image (B), and the output image (C) are initially displayed, the output image (C) can be excluded from the superimposition targets, and the background image (D) may be displayed, according to designation by the layout managing unit 35. In this case, the layout managing unit 35 switches the watermark image (E) from a non-display state to a display state. In this case, the display superimposing unit 36 also performs processes of enlarging the display, reducing the display, and moving the display area.

The page data storage unit 300 stores page data as indicated in Table 1.

**[Table 1]**

| PAGE DATA ID | START TIME | END TIME | STROKE ARRANGEMENT DATA ID | MEDIA DATA ID |
|---|---|---|---|---|
| p001 | 20130610102434 | 20130610102802 | st001 | m001 |
| p002 | 20130610102815 | 20130610103225 | st002 | m002 |
| p003 | 20130610103545 | 20130610104233 | st003 | m003 |
| ⋮ | ⋮ | ⋮ | ⋮ | ⋮ |

Table 1 conceptually indicates the page data. The page data is data for one page (stroke arrangement data (sets of stroke data) and media data) displayed on the display 3. Note that there are many types of parameters included in the page data, and therefore, here, the contents of the page data will be described separately in Tables 1 to 4.

As indicated in Table 1, the page data includes a page data ID for identifying any one of the pages; a start time indicative of the time when the display of the page has started; an end time indicative of the time when rewriting of the content of the page by strokes and gestures, etc., is no longer performed; a stroke arrangement data ID for identifying the stroke arrangement data generated by strokes drawn by the electronic pen 4 or the user's hand H; and a media data ID for identifying the media data, that are stored in association with each other. The stroke arrangement data is data for displaying the stroke image (B) illustrated in FIG. 7 on the display 3. The media data is data for displaying the background image (D) illustrated in FIG. 7 on the display 3.

According to such page data, for example, when the user draws the alphabetical letter "S" with the electronic pen 4, the letter is written by one stroke, and therefore one letter alphabetical letter [S] is indicated by one stroke data ID. However, when the user draws the alphabetical letter "T" with the electronic pen 4, the letter is written by two strokes, and therefore one alphabetical letter "T" is indicated by two stroke data IDs.

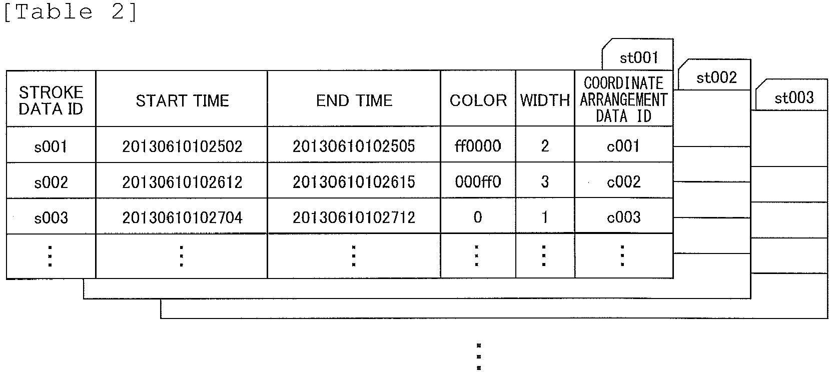

Furthermore, the stroke arrangement data indicates detailed information as indicated in Table 2. Table 2 conceptually indicates stroke arrangement data. As indicated in Table 2, one set of stroke arrangement data is expressed by a plurality of sets of stroke data. Also, one set of stroke data includes a stroke data ID for identifying the stroke data, a start time indicative of the starting time of writing one stroke, an end time indicative of the time of finishing writing one stroke, the color of the stroke, the width of the stroke, and a coordinate arrangement data ID for identifying the arrangement of the passing points of the stroke.

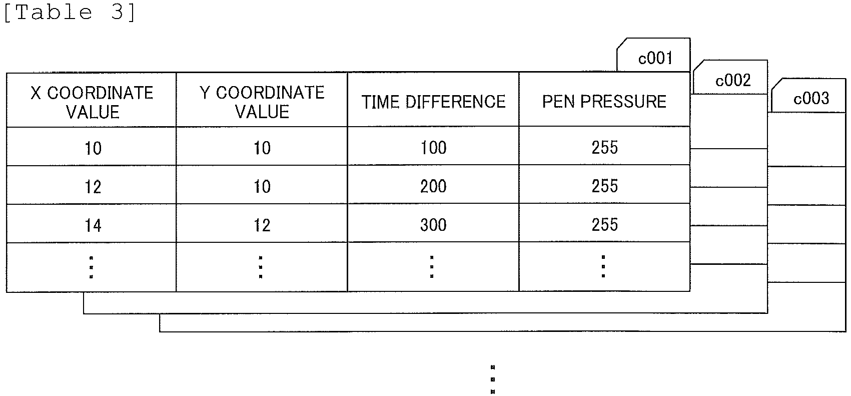

Furthermore, the coordinate arrangement data indicates detailed information as indicated in Table 3. Table 3 conceptually indicates the coordinate arrangement data. As indicated in Table 3, the coordinate arrangement data indicates information including one point (the X coordinate value and the Y coordinate value) on the display 3, the time (milliseconds (ms)) of the difference from the start time of the stroke to the time of passing the one point, and the pen pressure of the electronic pen 4 at this one point. That is, an assembly of points indicated in Table 3, is indicated by one set of coordinate arrangement data indicated in Table 2. For example, when the user draws the alphabetical letter "S" with the electronic pen 4, the letter is written by a single stroke, but the stroke passes through a plurality of passing points before finishing drawing the letter "S", and therefore the coordinate arrangement data indicates information of the plurality of passing points.

Furthermore, the media data in the page data indicated in Table 1 indicates detailed information as indicated in Table 4.

**[Table 4]**

| MEDIA DATA ID | DATA TYPE | RECORDING TIME | X COORDINATE VALUE | COORDINATE VALUE | WIDTH | HEIGHT | DATA |
|---|---|---|---|---|---|---|---|
| m001 | IMAGE | 20130610103432 | 0 | 0 | 1920 | 1080 | abc.jpg |
| m002 | IMAGE | 20130610105402 | 277 | 156 | 1366 | 768 | bcd.jpg |
| m003 | IMAGE | 20130610105017 | 277 | 156 | 1366 | 768 | cde.jpg |
| ⋮ | ⋮ | ⋮ | ⋮ | ⋮ | ⋮ | ⋮ | ⋮ |

Table 4 conceptually indicates media data. As indicated in Table 4, in the media data, the media data ID in the page data indicated in Table 1, the data type of the media data, the recording time when the page data has been stored in the page data storage unit 300 from the page processing unit 37, the position of the image (the X coordinate value and the Y coordinate value) and the size of the image (width and height) displayed on the display 3 according to the page data, and data indicative of the content of the media data, are associated with each other. Within this, the position of the image displayed on the display 3 according to the page data, indicates the position at the upper left end of the image displayed according to the page data, assuming that the coordinates of the upper left end of the display 3 are (X coordinate value, Y coordinate value) = (0, 0).

Referring back to FIG. 4, watermark image data is stored in the page data storage unit 300. The watermark image data includes information as indicated in Table 5.

**[Table 5]**

| FILE NAME | UPDATE DATE AND TIME | TYPE | CREATOR |
|---|---|---|---|
| Confidential.png | 2016/09/28 10:00 | PNG | Taro.Ito |
| Private.png | 2016/09/28 11:00 | PNG | Jiro.Ito |
| Secret.png | 2016/09/28 10:00 | PNG | Goro.Ito |

Table 5 conceptually indicates the watermark image data stored in the page data storage unit 300. As indicated in Table 5, each watermark image data is held as a file in which a file name, an update date and time, a type, and creator's information are held in association with each other. These items are included as attributes of files in the information processing apparatus, and other attributes that can be held by files may be registered. Although three files are registered in Table 5, the number of registered files may be one or more. Also, there may be a case where no file is registered (a watermark image cannot be displayed). In a case where a plurality of files are registered, watermark image data that has been displayed last, watermark image data selected by the user, watermark image data with the latest (or the oldest) update date and time, or watermark image data created by a user who logged in the electronic blackboard 2 is appropriately selected and used.

Although the type of each file is a transparent PNG (hereinafter referred to simply as PNG) that can handle transparency, but any file that can represent transparency such as transparent GIF may be used. Further, the watermark image generating unit 38 may create a watermark image whose transparency is controlled from JPEG or the like, even if not being able to hold transparency as a function of a file.

Next, the remote license management table 310 described. The remote license management table 310 manages license data necessary for executing the remote sharing process. In the remote license management table 310, as indicated in Table 6, the product ID of the electronic blackboard 2, the license ID used for authentication, and the expiration date of the license, are managed in association with each other.

**[Table 6]**

| PRODUCT ID | LICENSE ID | EXPIRATION DATE |
|---|---|---|
| 1001 | 12345678abcdefgh | 2012/12/31 |
| 1001 | 4321 dcba8765hgfe | - |
| ⋮ | ⋮ | ⋮ |

### (Functional configuration of file processing unit 40)

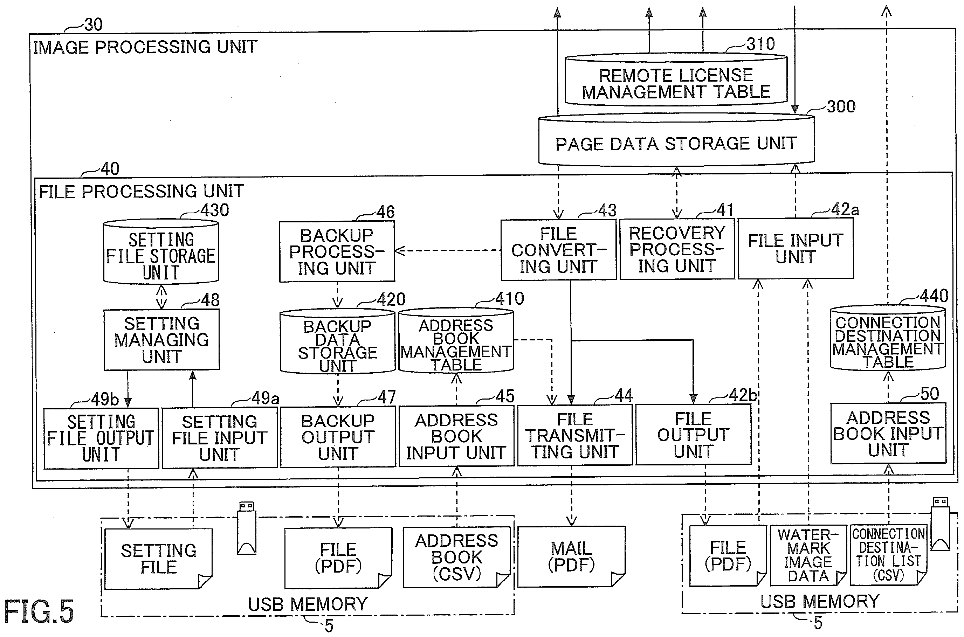

Next, with reference to FIG. 5, a functional configuration of the file processing unit 40 illustrated in FIG. 4 will be described. Note that FIG. 5 is a functional block diagram of the file processing unit. The file processing unit 40 includes a recovery processing unit 41, a file input unit 42a, a file output unit 42b, a file converting unit 43, a file transmitting unit 44, an address book input unit 45, a backup processing unit 46, a backup output unit 47, a setting managing unit 48, a setting file input unit 49a, and a setting file output unit 49b. Furthermore, the file processing unit 40 includes an address book management table 410, a backup data storage unit 420, a setting file storage unit 430, and a connection destination management table 440.

Among these elements, the recovery processing unit 41 detects abnormal termination after the electronic blackboard 2 abnormally ends, and recovers unsaved page data. For example, in a case of normal termination, the page data is recorded as a PDF file in the USB memory 5 via the file processing unit 40. However, in a case of abnormal termination such as when the power supply goes down, the page data remains to be recorded in the page data storage unit 300. Therefore, when the power is turned on again, the recovery processing unit 41 restores the page data by reading the page data from the page data storage unit 300.

The file input unit 42a reads a PDF file from the USB memory 5, and stores each page as page data in the page data storage unit 300. The file converting unit 43 converts the page data stored in the page data storage unit 300 into a PDF format file. Further, the file input unit 42a reads watermark image data and stores the watermark image data in the page data storage unit 300. The file input unit 42a may automatically read a predetermined type of file such as PNG from the USB memory 5 attached to the electronic blackboard 2, or may copy a file designated by the user from the USB memory 5 to the page data storage unit 300.

Further, the user may operate a desired terminal to communicate with the electronic blackboard 2, and use a Web page prepared by the electronic blackboard 2 to input and upload watermark image data to the electronic blackboard 2. In this case, the file input unit 42a serves as a Web server. The desired terminal designates the IP address of the electronic blackboard 2 with a browser or the like to receive, from the electronic blackboard 2, HTML data that can be transmitted as a file. Because the browser receives the selection of the file by the user, the desired terminal transmits the file of watermark image data selected by the user to the file input unit 42a. The file input unit 42a stores the file of the watermark image data in the page data storage unit 300. In other words, the file input unit 42a can obtain (acquire), from outside, watermark image data including information related to the transparency of a watermark image (E), and can store the obtained watermark image data in the page data storage unit 300.

The file output unit 42b records, in the USB memory 5, the PDF file output by the file converting unit 43.

The file transmitting unit 44 attaches the PDF file generated by the file converting unit 43, to an e-mail, and transmits the e-mail. The transmission destination of the file is determined by having the display superimposing unit 36 display the contents of the address book management table 410 on the display 3, and having the file transmitting unit 44 accept a selection of the destination that is made as the user operates an input device such as a touch panel. In the address book management table 410, as indicated in Table 7, the names of the destinations and the e-mail addresses of the destinations are managed in association.

**[Table 7]**

| NAME | MAIL ADDRESS |
|---|---|
| TARO | taro@atpha.co.jp |
| HANAKO | hanako@beta.co.jp |
| - | jiro@gamma.co.jp |
| ⋮ | ⋮ |

Furthermore, the file transmitting unit 44 can accept input of a mail address as the destination, as the user operates an input device such as a touch panel.

The address book input unit 45 reads a list file of e-mail addresses from the USB memory 5 and manages the list file in the address book management table 410.

The backup processing unit 46 backs up a file output by the file output unit 42b and a file transmitted by the file transmitting unit 44, by storing these files in the backup data storage unit 420. If the user does not set the backup, the backup process is not performed. The backup data is stored in a PDF format as indicated in Table 8.

**[Table 8]**

| |
|---|
| iwb_20130610104423.pdf |
| iwb_20130625152245.pdf |
| iwb_20130628113418.pdf |
| ⋮ |

The backup output unit 47 stores the backup files in the USB memory 5. When storing the files, a password is input for the purpose of security, by a user's operation of an input device such as a touch panel.

The setting managing unit 48 stores and reads various kinds of setting information for the electronic blackboard 2 in the setting file storage unit 430 to manage this information. Examples of various kinds of setting information include a network setting, a date and time setting, a regional and language setting, a mail server setting, an address book setting, a connection destination list setting, and a setting relating to backup. Note that the network setting is, for example, the setting of the IP address of the electronic blackboard 2, the setting of the net mask, the setting of the default gateway, the setting of the Domain Name System (DNS), or the like.

The setting file output unit 49b records various kinds of setting information for the electronic blackboard 2 in the USB memory 5 as a setting file. Note that contents of the setting file cannot be viewed by the user due to security.

The setting file input unit 49a reads the setting file stored in the USB memory 5 and applies various kinds of setting information to various settings of the electronic blackboard 2.

The address book input unit 50 reads a list file of connection destination IP addresses of the remote sharing process from the USB memory 5, and manages the list file in the connection destination management table 440. An example of the connection destination management table 440 is indicated in Table 9.

**[Table 9]**

| NAME | IP ADDRESS |
|---|---|
| CONFERENCE ROOM 1 | 192.0.0.1 |
| CONFERENCE ROOM 2 | 192.0.0.2 |
| - | 192.0.0.3 |
| ⋮ | ⋮ |

The connection destination management table 440 is a table managed in advance to reduce the trouble of having to input the IP address of the electronic blackboard 2 acting as a hosting device, by the user of a participating device, when the electronic blackboard 2 is the participating device to participate in the remote sharing process. In the connection destination management table 440, the name of the site where the electronic blackboard 2, which is the hosting device that can participate, is installed; and the IP address of the electronic blackboard 2, which is the hosting device, are managed in association with each other.

Note that the connection destination management table 440 may be omitted. However, in this case, the user of a participating device needs to input the IP address of the hosting device, by using an input device such as a touch panel, in order to start the remote requesting process with the hosting device. Therefore, the user of the participating device acquires the IP address of the hosting device from the user of the hosting device, by telephone or by e-mail, etc.

### (Functional configuration of communication control unit 60)

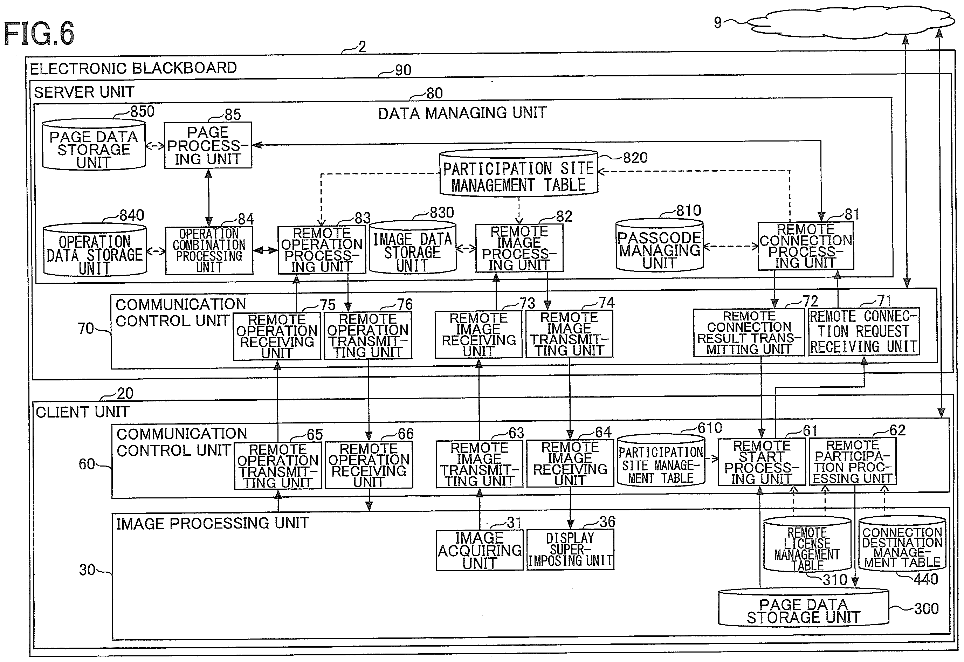

Next, with reference to FIG. 6, a functional configuration of the communication control unit 60 will be described. FIG. 6 is an example of a functional block diagram of the server unit 90 and the client unit 20. The communication control unit 60 implements control of communication with another one of the electronic blackboards 2 via the communication network 9, and communication with a communication control unit 70 described later in the server unit 90. Therefore, the communication control unit 60 includes a remote start processing unit 61, a remote participation processing unit 62, a remote image transmitting unit 63, a remote image receiving unit 64, a remote operation transmitting unit 65, a remote operation receiving unit 66, and a participation site management table 610.

Among these elements, the remote start processing unit 61 sends, to the server unit 90 of the same electronic blackboard 2, a request to newly start a remote sharing process, and receives a result of the request from the server unit 90. In this case, the remote start processing unit 61 refers to the remote license management table 310, and if license information (product ID, license ID, and expiration date) is managed, the remote start processing unit 61 is able to make a request to start a remote sharing process. However, when the license information is not managed, the remote start processing unit 61 is unable to make a request to start a remote sharing process.

The participation site management table 610 is a table for managing electronic blackboards 2 that are participating devices presently participating in the remote sharing process, when the electronic blackboard 2 is a hosting device. An example of the participation site management table 610 is indicated in Table 10.

**[Table 10]**

| NAME | IP ADDRESS |
|---|---|
| CONFERENCE ROOM 1 | 192.0.0.1 |
| CONFERENCE ROOM 2 | 192.0.0.2 |
| - | 192.0.0.8 |
| ⋮ | ⋮ |

In the participation site management table 610, the names of the sites where the participating electronic blackboards 2 are installed and the IP addresses of the participating electronic blackboards 2 are managed in association.

The remote participation processing unit 62 sends, via the communication network 9, a participation request to participate in the remote sharing process, to a remote connection request receiving unit 71 in the server unit 90 of the electronic blackboard 2 that is a hosting device which has already started the remote sharing process. Also in this case, the remote participation processing unit 62 refers to the remote license management table 310. Furthermore, when the remote participation processing unit 62 participates in a remote sharing process that has already started, the remote participation processing unit 62 refers to the connection destination management table 440 and acquires the IP address of the electronic blackboard 2 of the participation destination. Note that the remote participation processing unit 62 may not refer to the connection destination management table, and the IP address of the electronic blackboard 2 of the participation destination may be input by a user's operation of an input device such as a touch panel.

The remote image transmitting unit 63 transmits the output image (C) sent from the visual image acquiring unit 21 via the image acquiring unit 31, to the server unit 90.

The remote image receiving unit 64 receives, from the server unit 90, image data, which is transmitted from a visual image output device connected to another electronic blackboard 2, and outputs the image data to the display superimposing unit 36, to enable a remote sharing process.

The remote operation transmitting unit 65 transmits various kinds of operation data necessary for a remote sharing process, to the server unit 90. Examples of various kinds of operation data include addition of a stroke, erasing a stroke, editing (enlargement, reduction, and movement) of a stroke, storage of page data, creation of page data, duplication of page data, erasing page data, and data relating to switching the displayed page, etc. Furthermore, the remote operation receiving unit 66 receives operation data input at another electronic blackboard 2, from the server unit 90, and outputs the operation data to the image processing unit 30, thereby performing a remote sharing process.

### [Functional configuration of server unit]

Next, a functional configuration of the server unit 90 will be described with reference to FIG. 6. The server unit 90 is provided in each electronic blackboard 2, and any of the electronic blackboards 2 can serve as a server unit. Therefore, the server unit 90 includes the communication control unit 70 and a data managing unit 80.

### (Functional configuration of communication control Unit 70)

Next, a functional configuration of the communication control unit 70 will be described with reference to FIG. 6.

The communication control unit 70 controls communication between the communication control unit 70 in the client unit 20 in the same electronic blackboard 2, and the communication control unit 70 in the client unit 20 in another electronic blackboard 2 via the communication network 9. The data managing unit 80 manages data such as operation data and image data.

More specifically, the communication control unit 70 includes a remote connection request receiving unit 71, a remote connection result transmitting unit 72, a remote image receiving unit 73, a remote image transmitting unit 74, a remote operation receiving unit 75, and a remote operation transmitting unit 76.

Among these elements, the remote connection request receiving unit 71 receives a start request for starting a remote sharing process from the remote start processing unit 61, and receives a participation request for participating in a remote sharing process from the remote participation processing unit 62. The remote connection result transmitting unit 72 transmits the result of the start request of the remote sharing process to the remote start processing unit 61, and transmits the result of the participation request for the remote sharing process to the remote participation processing unit 62.

The remote image receiving unit 73 receives the image data (data of the output image (C)) from the remote image transmitting unit 63, and transmits the image data to a remote image processing unit 82 that will be described later below. The remote image transmitting unit 74 receives the image data from the remote image processing unit 82 and transmits the image data to the remote image receiving unit 64.

The remote operation receiving unit 75 receives operation data (data of the stroke image (B) or the like) from the remote operation transmitting unit 65, and transmits the operation data to a remote operation processing unit 83 that will be described later below. The remote operation transmitting unit 76 receives the operation data from the remote operation processing unit 83 and transmits the operation data to the remote operation receiving unit 66.

### (Functional configuration of data managing unit)

Next, with reference to FIG. 6, a functional configuration of the data managing unit 80 will be described. The data managing unit 80 includes a remote connection processing unit 81, the remote image processing unit 82, the remote operation processing unit 83, an operation combination processing unit 84, and a page processing unit 85. Furthermore, the server unit 90 includes a passcode managing unit 810, a participation site management table 820, an image data storage unit 830, an operation data storage unit 840, and a page data storage unit 850.

Among these elements, the remote connection processing unit 81 starts a remote sharing process and ends a remote sharing process. Furthermore, based on license information received by the remote connection request receiving unit 71 together with a remote sharing process start request from the remote start processing unit 61, or license information received by the remote connection request receiving unit 71 together with a participation request for participating in a remote sharing process from the remote participation processing unit 62, the remote connection processing unit 81 confirms whether there is a license and whether the present time is within the license period. Furthermore, the remote connection processing unit 81 confirms whether the number of participation requests from other electronic blackboards 2 as the client units, exceed a predetermined number of participants that can participate.

Furthermore, the remote connection processing unit 81 determines whether a passcode, which is sent when a participation request for participating in a remote sharing process is made from another electronic blackboard 2, is the same as the passcode managed by the passcode managing unit 810, and when the passcodes are the same, the remote connection processing unit 81 allows the participation in the remote sharing process. Note that the passcode is issued by the remote connection processing unit 81 when a new remote sharing process is started, and the user of the electronic blackboard 2, which is a participating device attempting to participate in the remote sharing process, is notified of the passcode by telephone or electronic mail, etc., from the user of the electronic blackboard 2 serving as the hosting device. Accordingly, the user of the participating device, who is attempting to participate in the remote sharing process, will be allowed to participate, by inputting the passcode to the participating device with an input device such as a touch panel to make a participation request. Note that when the usability of the user is to be prioritized over security, confirmation of the passcode may be omitted, and only the license status may be checked.

Furthermore, when the electronic blackboard 2 is the hosting device, the remote connection processing unit 81 stores, in the participation site management table 820 in the server unit 90, the participation site information included in the participation request sent from the remote participation processing unit 62 of the participating device via the communication network 9. Then, the remote connection processing unit 81 reads the remote site information stored in the participation site management table 820, and transmits the remote site information to the remote connection result transmitting unit 72. The remote connection result transmitting unit 72 transmits the remote site information to the remote start processing unit 61 in the client unit 20 of the same hosting device. The remote start processing unit 61 stores the remote site information in the participation site management table 610. Accordingly, in the hosting device, both the client unit 20 and the server unit 90 manage the remote site information.

The remote image processing unit 82 receives image data (output image (C)) from a visual image output device (the notebook PC 6, etc.) connected to the client unit of each electronic blackboard 2 participating in the remote sharing process (including the client unit of the electronic blackboard 2 that is the hosting device), and stores the image data in the image data storage unit 830. Also, the remote image processing unit 82 determines the order of displaying the image data to be subjected to the remote sharing process, according to the order of the time of arriving at the server unit 90 of the electronic blackboard 2 that is the hosting device. Furthermore, the remote image processing unit 82 refers to the participation site management table 820 and transmits the image data in the determined order as described above, to the client units 20 of all the electronic blackboards 2 participating in the remote sharing process (including the client unit of the electronic blackboard 2 serving as the hosting device), via the communication control unit 70 (the remote image transmitting unit 74).

The remote operation processing unit 83 receives various kinds of operation data such as a stroke image (stroke image (B) etc.), etc., drawn at the client unit of each electronic blackboard 2 participating in the remote sharing process (including the client unit of the electronic blackboard 2 that is the hosting device), and determines the order of displaying the images to be subjected to the remote sharing process, according to the order of the time of arriving at the server unit 90 of the electronic blackboard 2 serving as the hosting device. Note that the various kinds of operation data are the same as the various kinds of operation data described above. Furthermore, the remote operation processing unit 83 refers to the participation site management table 820 and transmits the operation data to the client units 20 of all of the electronic blackboards 2 participating in the remote sharing process (including the client unit of the electronic blackboard 2 serving as the hosting device).

The operation combination processing unit 84 combines the sets of operation data of the respective electronic blackboards 2 output from the remote operation processing unit 83, and stores operation data as the result of this combination in the operation data storage unit 840, and also returns the operation data to the remote operation processing unit 83. This operation data is transmitted from the remote operation transmitting unit 76 to the client unit of the electronic blackboard that is the hosting device and the client units of the respective electronic blackboards 2 that are the participating devices, such that an image related to the same operation data is displayed on each of the electronic blackboards 2. An example of the operation data is indicated in Table 11.

**[Table 11]**

| SEQ | OPERATION NAME | TRANSMISSION SOURCE IP ADDRESS: Port No. | TRANSMISSION DESTINATION IP ADDRESS: Port No. | OPERATION TYPE | OPERATION TARGET (PAGE DATA ID /STROKE DATA ID) | DATA |
|---|---|---|---|---|---|---|
| 1 | ADD | 192.0.0.1: 50001 | 192.0.0.1: 50000 | STROKE | p005 | (STROKE DATA) |
| 2 | ADD | 192.0.0.1: 50000 | 192.0.0.2: 50001 | STROKE | p005 | (STROKE DATA) |
| 3 | UPDATE | 192.0.0.2: 50001 | 192.0.0.1: 50000 | STROKE | s006 | (50,40) |
| 4 | UPDATE | 192.0.0.1: 50000 | 192.0.0.1: 50001 | STROKE | s006 | (50,40) |
| 5 | DELETE | 192.0.0.2: 50001 | 192.0.0.1: 50000 | STROKE | s007 | - |
| 6 | DELETE | 192.0.0.1: 50000 | 192.0.0.1: 50001 | STROKE | s007 | - |
| 7 | ADD | 192.0.0.1: 50001 | 192.0.0.1: 50000 | PAGE | - | - |
| 8 | ADD | 192.0.0.1: 50000 | 192.0.0.2: 50001 | PAGE | - | - |
| 9 | ADD | 192.0.0.2: 50001 | 192.0.0.1: 50000 | IMAGE | p006 | aaa.jpg |
| 10 | ADD | 192.0.0.1: 50000 | 192.0.0.1: 50001 | IMAGE | p006 | aaa.jpg |
| ⋮ | ⋮ | ⋮ | ⋮ | ⋮ | ⋮ | ⋮ |

As indicated in Table 11, the operation data includes Sequence (SEQ), the operation name of the operation data, the IP address and the Port No. of the client unit (the server unit) of the electronic blackboard 2 that is the transmission source of the operation data, the IP address and the Port No. of the client unit (the server unit) of the electronic blackboard 2 that is the transmission destination of the operation data, the operation type of the operation data, the operation target of the operation data, and data indicating the content of the operation data, managed in association with each other. For example, SEQ1 indicates that when a stroke has been drawn at the client unit (Port No.: 50001) of the electronic blackboard 2 (IP address: 192.0.0.1) serving as the hosting device, operation data has been transmitted to the server unit (Port No.: 50000) of the electronic blackboard 2 (IP address: 192.0.0.1) that is the same hosting device. In this case, the operation type is "STROKE", the operation target is the page data ID "p005", and the data indicating the content of the operation data is data indicating a stroke. Furthermore, SEQ2 indicates that from the server unit (Port No.:50000) of the electronic blackboard (IP address: 192.0.0.1) serving as the hosting device, operation data has been transmitted to the client unit (Port No.: 50001) of another electronic blackboard 2 (IP address: 192.0.0.1) that is a participating device.

Note that the operation combination processing unit 84 performs the combination in the order in which the operation data is input to the operation combination processing unit 84, and therefore if the communication network 9 is not congested, the stroke image (B) is displayed on the displays 3 of all of the electronic blackboards 2 participating in the remote sharing process, in the order of strokes drawn by the users of the respective electronic blackboards 2.

The page processing unit 85 has a function similar to that of the page processing unit 37 in the image processing unit 30 of the client unit 20, and also in the server unit 90, the page data indicated in Tables 1 to 3 is stored in the page data storage unit 850. Note that the page data storage unit 850 has the same contents as the page data storage unit 300 in the image processing unit 30, and therefore descriptions thereof are omitted.

### <Processes or operations according to embodiment>

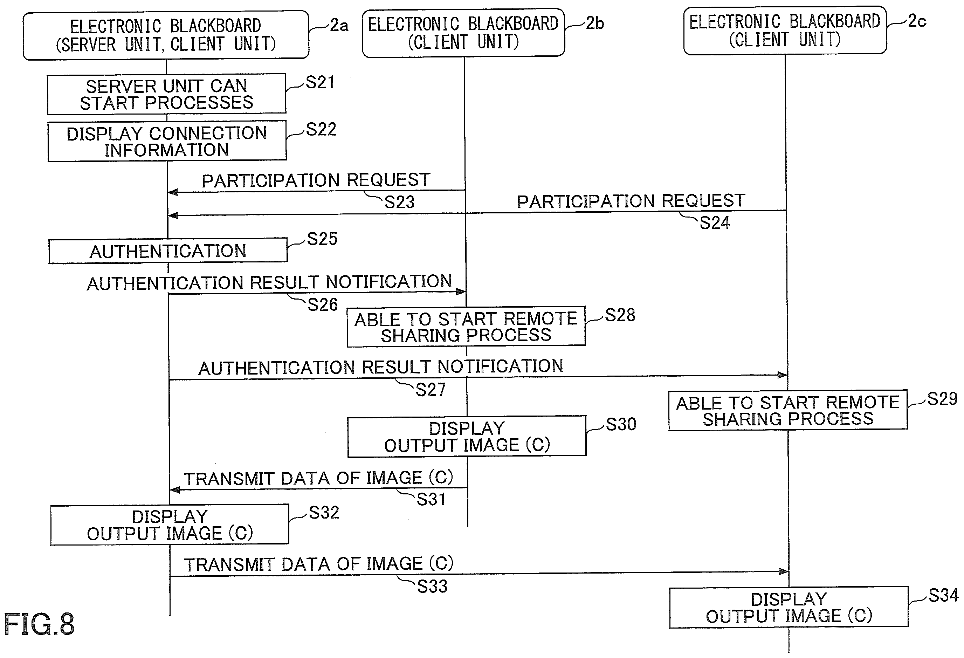

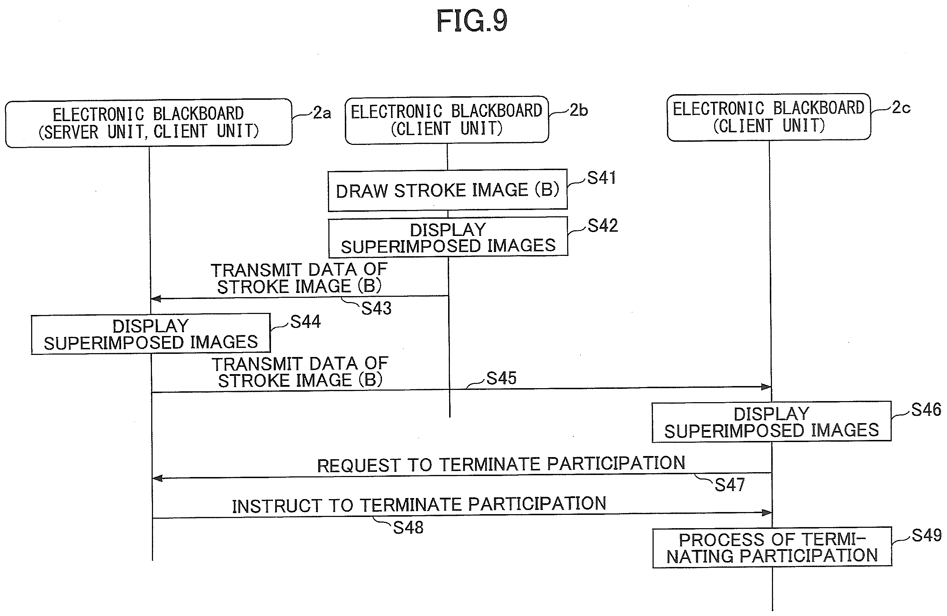

Subsequently, with reference to FIGS. 8 and 9, processes or operations according to the present embodiment will be described. Note that FIGS. 8 and 9 are sequence diagrams illustrating processes of each electronic blackboard 2. In the embodiment illustrated in FIGS. 8 and 9, a description is given of a case where the electronic blackboard 2a serves as a hosting device (server unit and client unit) that hosts a remote sharing process, and the electronic blackboards 2b and 2c act as participating devices (client units) that participate in the remote sharing process. Furthermore, here, the displays 3a, 3b, and 3c are connected to the electronic blackboards 2a, 2b, and 2c, respectively, and the notebook PCs 6a, 6b, and 6c are also connected to the electronic blackboards 2a, 2b, and 2c, respectively. Furthermore, the electronic pens 4a, 4b, and 4c are used at the electronic blackboards 2a, 2b, and 2c, respectively.

### (Participation process)

First, a process for the electronic blackboards 2b and 2c to participate in a remote sharing process will be described with reference to FIG. 8.

When the user turns on the power switch of the electronic blackboard 2a, the client unit 20 of the electronic blackboard 2a is activated. Then, when the user performs an operation to activate the server unit 90 with an input device such as a touch panel, the remote start processing unit 61 of the client unit 20 outputs an instruction to start a process by the server unit 90, to the remote connection request receiving unit 71 of the server unit 90 of the same electronic blackboard 2a. Accordingly, in the electronic blackboard 2a, not only the client unit 20 but also the server unit 90 can start various processes (step S21).

Next, the UI image generating unit 33 in the client unit 20 of the electronic blackboard 2a generates connection information, which is used for establishing a connection with the electronic blackboard 2a, and the visual image superimposing unit 28 displays the connection information, which has been acquired from the UI image generating unit 33 via the display superimposing unit 36, on the display 3a (step S22).

This connection information includes the IP address of the hosting device and a passcode generated for the present remote sharing process. In this case, a passcode stored in the passcode managing unit 810 is read by the remote connection processing unit 81 illustrated in FIG. 7, and sequentially transmitted to the remote connection result transmitting unit 72 and the remote start processing unit 61. Furthermore, the passcode is transmitted from the communication control unit 60 including the remote start processing unit 61, to the image processing unit 30 illustrated in FIG. 5, and is finally input to the UI image generating unit 33. Thus, the connection information will include the passcode. Then, the connection information is reported to the users of the electronic blackboards 2b and 2c by the user of the electronic blackboard 2a by telephone or electronic mail. Note that when there is the connection destination management table 440, even if the connection information does not include the IP address of the hosting device, the participating device can make a participation request.

Next, in the electronic blackboards 2b and 2c, when the input of the connection information is accepted, according to the respective user's operations of input devices such as touch panels, the remote participation processing unit 62 in the client unit 20 of the respective electronic blackboard 2a and 2b make participation requests by transmitting passcodes, to the communication control unit 70 in the server unit 90 of the electronic blackboard 2a via the communication network 9, based on the IP address in the connection information (steps S23 and S24). Accordingly, the remote connection request receiving unit 71 of the communication control unit 70 receives the participation request (including the passcode), from each of the electronic blackboards 2b and 2c, and outputs the passcode to the remote connection processing unit 81.

Next, the remote connection processing unit 81 authenticates the passcode received from each of the electronic blackboard 2b and 2c by using a passcode managed by the passcode managing unit 810 (step S25).

Then, the remote connection result transmitting unit 72 reports the authentication result to the client unit 20 of each of the electronic blackboard 2b and 2c (steps S26 and S27).

When it is determined that each of the electronic blackboards 2b and 2c is a valid electronic blackboard 2 by the authentication in step S25, communication of a remote sharing process is established between the electronic blackboard 2a serving as the hosting device and the electronic blackboards 2b and 2c serving as the participating devices, and the remote participation processing unit 62 in the client unit 20 of each of the electronic blackboards 2b and 2c enables the start of the remote sharing process with other electronic blackboards 2 (steps S28 and S29).

### (Display of output image)

Next, a process of displaying the output image (C) in the remote sharing process will be described with reference to FIG. 8.

First, the electronic blackboard 2b displays the output image (C) on the display 3b (step S30). Specifically, the image acquiring unit 31 of the electronic blackboard 2b receives data of the output image (C) displayed on the notebook PC 6b, from the notebook PC 6b via the visual image acquiring unit 21, and transmits the data of the output image (C) to the display 3b via the display superimposing unit 36 and the visual image superimposing unit 28, and then the display 3b displays the output image (C).

Next, the image processing unit 30 including the image acquiring unit 31 of the electronic blackboard 2b transmits the data of the output image (C) to the remote image transmitting unit 63, so that the communication control unit 60 including the remote image transmitting unit 63 transmits the data of the output image (C) to the communication control unit 70 of the electronic blackboard 2a serving as the hosting device, via the communication network 9 (step S31). Accordingly, the remote image receiving unit 73 of the electronic blackboard 2a receives the data of the output image (C), and outputs the data to the remote image processing unit 82, so that the remote image processing unit 82 stores the data of the output image (C) in the image data storage unit 830.

Next, the electronic blackboard 2a serving as the hosting device displays the output image (C) on the display 3a (step S32). Specifically, the remote image processing unit 82 of the electronic blackboard 2a outputs the data of the output image (C) received from the remote image receiving unit 73, to the remote image transmitting unit 74. The remote image transmitting unit 74 outputs the data of the output image (C) to the remote image receiving unit 64 in the client unit 20 of the electronic blackboard 2a, which is the same hosting device. The remote image receiving unit 64 outputs the data of the output image (C) to the display superimposing unit 36. The display superimposing unit 36 outputs the data of the output image (C) to the visual image superimposing unit 28. The visual image superimposing unit 28 outputs the data of the output image (C) to the display 3a. Accordingly, the display 3a displays the output image (C).

Next, the communication control unit 70 including the remote image transmitting unit 74 in the server unit 90 of the electronic blackboard 2a serving as the hosting device, transmits, via the communication network 9, the data of the output image (C) to the communication control unit 60 of the electronic blackboard 2c other than the electronic blackboard 2b that is the transmission source of the data of the output image (C) (step S33). Accordingly, the remote image receiving unit 64 of the electronic blackboard 2c, which is the participating device, receives the data of the output image (C).

Next, the electronic blackboard 2c displays the output image (C) on the display 3c (step S34). Specifically, the remote image receiving unit 64 of the electronic blackboard 2c outputs the data of the output image (C) received in the step S33, to the display superimposing unit 36 of the electronic blackboard 2c. The display superimposing unit 36 outputs the data of the output image (C) to the visual image superimposing unit 28. The visual image superimposing unit 28 outputs the data of the output image (C) to the display 3c. Accordingly, the display 3c displays the output image (C).

Note that when each of a UI image (A), a stroke image (B), and a watermark image (E), as well as the data of the output image (C), are input to the visual image superimposing unit 28, the display superimposing unit 36 generates superimposed images (A, B, C), and the visual image superimposing unit 28 outputs data of the superposed images (A, B, C) to the display 3c. As will be described later below, the watermark image (E) is not displayed. Also, when the data of a visual image (F) for a TV conference has been sent from the TV conference terminal 7 to the visual image superimposing unit 28, the visual image superimposing unit 28 superimposes the data of the visual image (F) for the TV conference on the superimposed images (A, B, C) by a picture-in-picture operation, and outputs the superimposed images to the display 3c.

Note that a watermark image (E) is not transmitted and received between a hosting device and a participating device. Therefore, whether or not a watermark image (E) is displayed depends on each electronic blackboard 2. Also, watermark images (E) displayed by the respective electronic blackboards 2 may also be different (may be the same) depending on the electronic blackboards 2.

The watermark image data may be transmitted and received between the electronic blackboards 2. Each electronic blackboard 2 includes a function to transmit setting information in which settings related to the operation of the electronic blackboard 2 are described. The setting information includes, for example, information such as setting (synchronization time, restart time etc.) for the electronic blackboard 2 to operate properly, setting for permitting or limiting the operation of the electronic blackboard 2 (setting related to security such as a passcode), on/off setting of each function, and setting (IP address etc.) for communicating with the Internet or other devices via a network. Using the function to transmit setting information, the watermark image data can be shared together with the setting information between the electronic blackboards 2.

### (Display of superimposed images)

Next, with reference to FIG. 9, a process of displaying superimposed images in the remote sharing process will be described.

First, at the electronic blackboard 2b, the user draws a stroke image (B) on the electronic blackboard 2b by using the electronic pen 4b (step S41).

Next, as illustrated in FIG. 7, the display superimposing unit 36 of the electronic blackboard 2b superimposes the stroke image (B) on the UI image (A) and the output image (C), and the visual image superimposing unit 28 displays the superimposed images (A, B, C) on the display 3b of the electronic blackboard 2b (step S42). Specifically, the stroke processing unit 32 of the electronic blackboard 2b receives data of the stroke image (B) as operation data, from the coordinate detecting unit 22 and the contact detecting unit 24 via the event assigning unit 25, and transmits the data to the display superimposing unit 36. Accordingly, the display superimposing unit 36 can superimpose the stroke image (B) on the UI image (A) and the output image (C), and the visual image superimposing unit 28 can display the superimposed images (A, B, C) on the display 3b of the electronic blackboard 2b.

Next, the image processing unit 30 including the stroke processing unit 32 of the electronic blackboard 2b transmits the data of the stroke image (B) to the remote operation transmitting unit 65, and the remote operation transmitting unit 65 of the electronic blackboard 2b transmits the data of the stroke image (B) to the communication control unit 70 of the electronic blackboard 2a serving as the hosting device, via the communication network 9 (step S43) .

Accordingly, the remote operation receiving unit 75 of the electronic blackboard 2a receives the data of the stroke image (B) and outputs the data to the remote operation processing unit 83, so that the remote operation processing unit 83 outputs the data of the stroke image (B) to the operation combination processing unit 84. In this manner, the data of the stroke image (B) drawn at the electronic blackboard 2b is sequentially transmitted to the remote operation processing unit 83 of the electronic blackboard 2a, which is the hosting device, each time drawing is performed. The data of this stroke image (B) is data indicated by each stroke data ID indicated in FIG. 8. Therefore, for example, as described above, when the user draws the alphabetical letter "T" with the electronic pen 4, the letter is written by two strokes. Therefore the sets of data of the stroke image (B) indicated by two stroke data IDs are sequentially transmitted.

Next, the electronic blackboard 2a serving as the hosting device displays the superimposed images (A, B, C) including the data of the stroke image (B) sent from the electronic blackboard 2b, on the display 3a (step S44). Specifically, the operation combination processing unit 84 of the electronic blackboard 2a combines the sets of data of the plurality of stroke images (B) sequentially sent via the remote operation processing unit 83, and stores the combined data in the operation data storage unit 840 and returns the combined data to the remote operation processing unit 83. Accordingly, the remote operation processing unit 83 outputs, to the remote operation transmitting unit 76, the data of the stroke images (B) after the combination, which is received from the operation combination processing unit 84. The remote operation transmitting unit 76 outputs the data of the stroke images (B) after the combination to the remote operation receiving unit 66 of the client unit 20 of the electronic blackboard 2a that is the same hosting device. The remote operation receiving unit 66 outputs the data of the stroke images (B) after the combination to the display superimposing unit 36 in the image processing unit 30. Therefore, the display superimposing unit 36 superimposes the stroke images (B) after the combination on the UI image (A) and the output image (C). Finally, the visual image superimposing unit 28 displays the superimposed images (A, B, C) superimposed by the display superimposing unit 36, on the display 3a.

Next, the communication control unit 70 including the remote operation transmitting unit 76 in the server unit 90 of the electronic blackboard 2a serving as the hosting device, transmits the data of the stroke images (B) after the combination, via the communication network 9, to the communication control unit 60 of the electronic blackboard 2c other than the electronic blackboard 2b that is the transmission source of the data of the stroke images (B) (step S45). Accordingly, the remote operation receiving unit 66 of the electronic blackboard 2c, which is the participating device, receives the data of the stroke images (B) after the combination.

Next, the electronic blackboard 2c displays the superimposed images (A, B, C) on the display 3c (step S46). Specifically, the remote operation receiving unit 66 of the electronic blackboard 2c outputs the data of the stroke images (B) after the combination received in the step S45, to the image processing unit 30 of the electronic blackboard 2c. The display superimposing unit 36 of the image processing unit 30 superimposes the data of the UI image (A) and the data of the output image (C), with the data of the stroke images (B) after the combination, and outputs the data of the superimposed images (A, B, C) to the visual image superimposing unit 28. The visual image superimposing unit 28 outputs the data of the superimposed images (A, B, C) to the display 3c. Accordingly, the display 3c displays the superposed images (A, B, C).

Note that in the above process, the output image (C) is displayed on the display 3; however, the background image (D) may be displayed instead of this output image (C). Alternatively, the exclusive relationship between the output image (C) and the background image (D) may be canceled, and both the output image (C) and the background image (D) may be simultaneously displayed on the display 3.

### (End of participation)

Next, with reference to FIG. 9, a process in which a participating apparatus terminates the participation in a remote sharing process will be described. In the embodiment illustrated in FIG. 9, a process in which the electronic blackboard 2c terminates the participation, is illustrated.

First, at the electronic blackboard 2c, upon accepting a request to terminate the participation made by operating an input device such as a touch panel by the user, the remote participation processing unit 62 sends the request to terminate the participation to the communication control unit 70 in the server unit 90 of the electronic blackboard 2a serving as the hosting device (step S47). Accordingly, the remote connection request receiving unit 71 of the communication control unit 70 receives the participation termination request from the electronic blackboard 2c, and outputs the participation termination request together with the IP address of the electronic blackboard 2c, to the remote connection processing unit 81. Then, based on the IP address sent from the remote connection request receiving unit 71, the remote connection processing unit 81 of the electronic blackboard 2a erases, from the participation site management table 820, the IP address of the electronic blackboard 2c that has made the participation termination request and the name of the site where electronic blackboard 2c is installed, and outputs the IP address of the electronic blackboard 2c and a report indicating the erasing, to the remote connection result transmitting unit 72.

Next, the communication control unit 70 including the remote connection result transmitting unit 72 instructs the communication control unit 60 in the client unit 20 of the electronic blackboard 2c, to terminate the participation via the communication network 9 (step S48). Accordingly, the remote participation processing unit 62 of the communication control unit 60 in the electronic blackboard 2c terminates the participation by performing a participation termination process of disconnecting the communication of the remote sharing process (step S49).

### <Upload of watermark image>

As described above, for example, using a manager terminal, a manager can communicate with an electronic blackboard 2 and upload the file of a watermark image to the electronic blackboard 2.

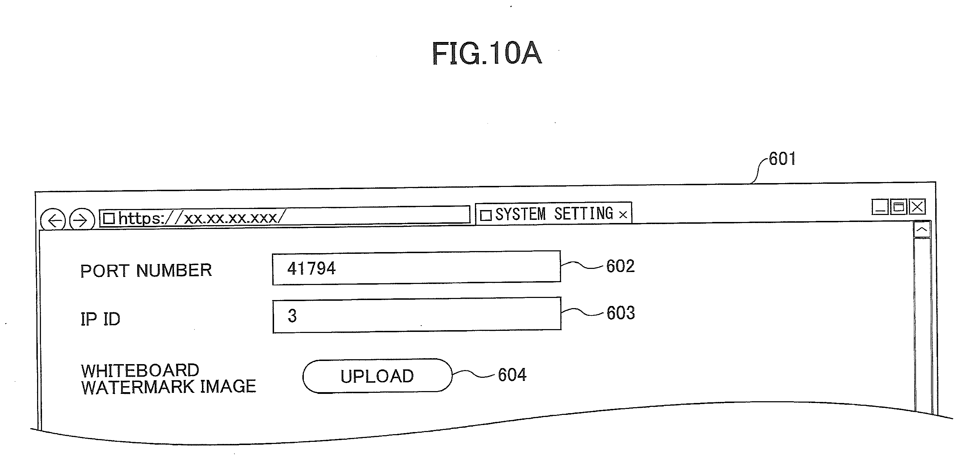

FIG. 10A illustrates a screen example of the manager terminal. FIG. 10A illustrates a part of a Web page that is provided by a Web server of the electronic blackboard 2. In the following, the screen illustrated in FIG. 10A is referred to as an upload screen 601. The upload screen 601 includes a port number field 602, an IPID field 603, and an upload button 604. In the port number field 602, a port number for receiving various settings by the electronic blackboard 2 is set. An IPID is input in the IPID field 603. The IPID is information for specifying the IP address of the electronic blackboard 2, and has the same value as the ID of the electronic blackboard 2. The manager can easily upload a watermark image by inputting an IPID without inputting an IP address. A table in which the ID of the electronic blackboard 2 is associated with the IP address of the electronic blackboard 2 is transmitted from the electronic blackboard 2 or stored in the manager terminal. Note that an IP address may be input. Note that in order to specify a target electronic blackboard, an IP address or a host name associated with the target electronic blackboard is often input in the address input field of FIG. 10A. In such a case, because the IP address has already been specified, an IPID field may be omitted.

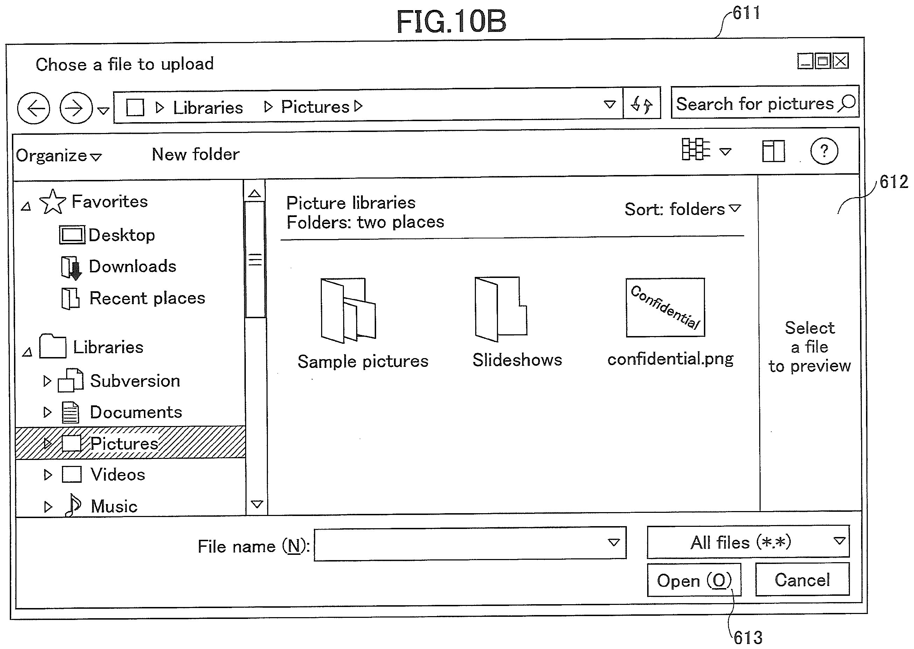

Upon the manager pushing the upload button 604, a file selection screen 611 of FIG. 10B is displayed. The file selection screen 611 has a file list section 612 and an open button 613. The manager selects a file of a watermark image from the file list section 612 and pushes the open button 613. As a result, the file of the watermark image is transmitted to the electronic blackboard 2.

### <Watermark image>

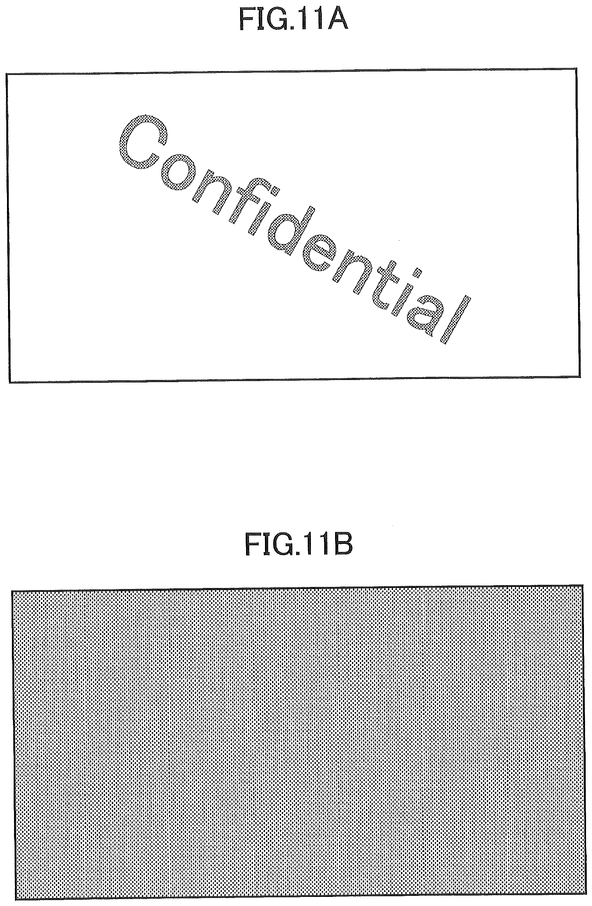

FIG. 11A illustrates an example of a watermark image. FIG. 11B illustrates another example of a watermark image. FIG. 11A illustrates the watermark image displaying characters "Confidential", and FIG. 11B illustrates the watermark image of an entire uniform color. Note that for the convenience of description, FIG. 11A and FIG. 11B each illustrate a state in which the UI image (A), the stroke image (B), the output image (C), and the background image (D) are not displayed.

When the watermark image of FIG. 11A is displayed on the display 3, it is possible to report, to one or more users viewing the display 3, that the stroke image (B) and the background image (C) are confidential. When the watermark image of FIG. 11B is displayed on the display 3, because it is possible to display the display 3, which is usually in white, in a color at low brightness, it is possible to prevent the user from feeling dazzled. Lowering the brightness of the display 3 may cause the screen to be darker, but using the watermark image (E) makes it possible to reduce dazzle without lowering the brightness of the display 3. For example, if it is a uniform color of green or black (which is not required to be perfect black), a color similar to that of a blackboard on which characters and the like are drawn by choke is acquired. If it is a watermark image of a transparent uniform color, because the entirety is dark, an effect of adjusting the contrast can also be acquired.

Because the watermark image (E) as illustrated in FIGS. 11 is in front of the output image (C), the users can view the output image (C) through the watermark image (E). As described above, the watermark image (E) stored in the electronic blackboard 2 may be, for example, an image having one or more predetermined characters as illustrated in FIG. 11A or an image having a uniform color as illustrated in FIG. 11B.

The user can set the transparency in percentage. Also, PNG has a function to set transparency in a pixel unit. According to the present embodiment, it is assumed that 0% is completely transparent and 100% is completely opaque. The reason that the definition is opposite to that of interpretation of general language is because of according to the definition of transparency of PNG, and 0% may be defined as completely opaque, and 100% may be defined as completely transparent.

FIG. 11A illustrates the watermark image in which the transparency of the portion (pixel unit) of characters "Confidential" is 20%, and the transparency of other portions is 0%. FIG. 11B illustrates an example acquired by superimposing, on an entirely white image, a watermark image that is entirely black and with 20% of transparency.

The characters in FIG. 11A and the uniform image in FIG. 11B are merely examples. The electronic blackboard 2 can display various characters as watermark images, and can display various landscapes and photographs as watermark images. Also, the watermark image may be a moving image. As described above, the operation processing unit 26 can receive setting (a setting value) of the transparency of a part or the entirety of the watermark image (E). The watermark image (E) is displayed with the set transparency.

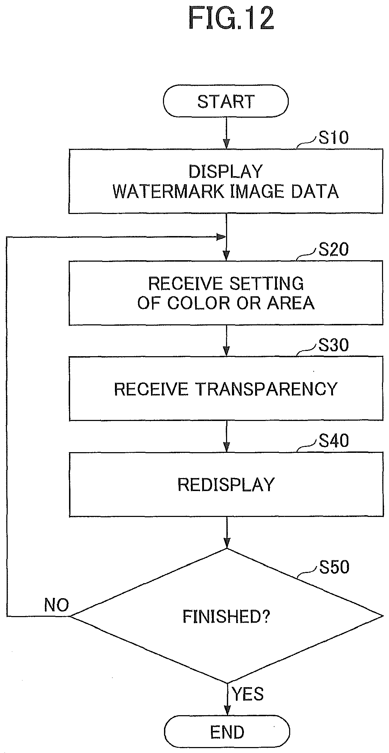

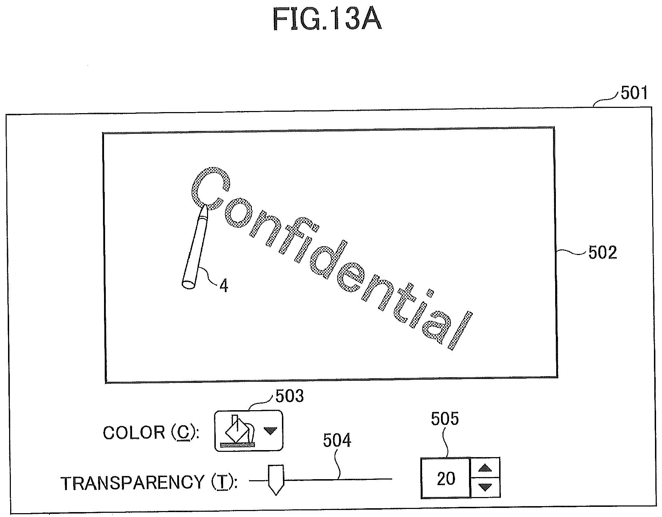

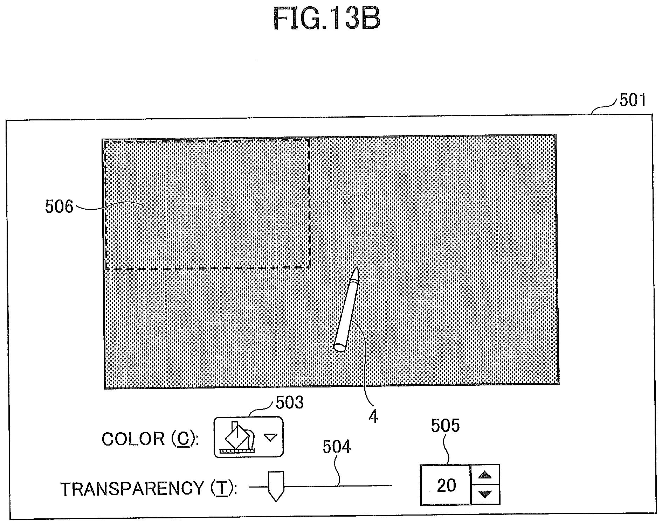

FIG. 12 is an example of a flowchart that describes a method of setting transparency. The description will be given with reference to FIGS. 13A and 13B as appropriate. First, the user selects a menu for selecting the transparency of the watermark image from the UI image (A). In a case where a plurality of sets of watermark image data are stored in the page data storage unit 300, the user selects, from a list, watermark image data whose transparency is desired to be set. Thereby, the watermark image generating unit 38 displays the watermark image (E) on the display 3 (step S10).

Further, the watermark image generating unit 38 receives setting of a color or an area to which the transparency is to be set (step S20). More specifically, upon the coordinate detecting unit 22 detecting coordinates contacted by the electronic pen 4 or a finger, the event assigning unit 25 determines that a UI operation is performed and sends a notification to the operation processing unit 26. The operation processing unit 26 determines an operation content (a color or an area of the setting operation) based on the coordinates contacted by the electronic pen 4 or the finger and sends a notification to the watermark image generating unit 38.

Next, the watermark image generating unit 38 receives setting of transparency (step S30). For example, the transparency of the watermark image is set by the user. A process flow from the coordinate detecting unit 22 to the watermark image generating unit 38 is similar to that in step S20. The watermark image generating unit 38 performs redisplaying with the transparency set in step S30 with respect to the transparency of the area of the color designated in step S20.

The watermark image generating unit 38 repeats the processes of steps S20 to S40 until the user finishes the setting of the transparency (step S50) .

FIG. 13A illustrates an example of a transparency setting screen 501 for receiving designation of a color and receiving setting of transparency. The transparency setting screen 501 includes a watermark image field 502 where a watermark image is displayed, a color setting section 503, a transparency slider 504, and a transparency input field 505.

The user designates a color whose transparency is to be changed with the electronic pen 4 or a finger. For example, when the user changes the transparency of the characters "Confidential", the user touches a part of "Confidential" with the electronic pen 4 or a finger. Because the touched pixel can be identified (detected) by the coordinate detecting unit 22, the watermark image generating unit 38 can detect the color of this pixel.

Next, upon the user operating the transparency slider 504 or the transparency input field 505 to set the transparency, the watermark image generating unit 38 receives this and sets all the pixels having the same color to be at the transparency set by the user. Transparency is recorded in watermark image data for each pixel.

In this way, because the transparency can be changed while designating a part of the characters, it is possible to change the transparency of only the characters without changing the transparency of entire watermark image data having two or more colors (part of characters and others). In other words, the user can change (set) the transparency of the watermark image partially and entirely.

In addition, the user can change the characters "Confidential" and the color of the background. Upon the user pushing the color setting unit 503 with the electronic pen 4 or a finger, the watermark image generating unit 38 receives this and displays a color palette. The user can select a desired color from the color palette to change the color of the pixel designated by the touch of the electronic pen 4 or the finger to be the selected color.

FIG. 13B illustrates an example of a transparency setting screen 501 for receiving designation of an area and receiving setting of transparency. The user designates an area 506 whose transparency is to be changed with the electronic pen 4 or a finger. For example, the user designates two points to draw a rectangular area, draws a circle, or draws an area 506 with free writing. Because the watermark image generating unit 38 acquires the coordinates of the area 506 via the coordinate detecting unit 22, the watermark image generating unit 38 can specify pixels within this area.

Next, upon the user operating the transparency slider 504 or the transparency input field 505 to set the transparency, the watermark image generating unit 38 receives this and sets the designated pixels to be at the transparency set by the user. In the transparency setting screen 501 of FIG. 13B, the transparency can be set while designating a desired area of watermark image data having a uniform color or complex watermark image data having many colors. Note that similar to FIG. 13A, the color of an area designated by the user can be changed. The transparency of the entire watermarked image can be set by selecting the entire watermark image as the area 506.

Both the setting method of FIG. 13A and the setting method of FIG. 13B are implemented on the electronic blackboard 2, and can be selected by the user as desired.

### <Enabling watermark image data>

Control whether or not the electronic blackboard 2 displays a watermark image will be described. When watermark image data is stored in the page data storage unit 300, it is useful to automatically display, by the electronic blackboard 2, the watermark image (E) on the display 3 (without a user's operation), because this makes it possible to prevent the user from forgetting to display the watermark image (E). Therefore, when a watermark image (E) is stored, the electronic blackboard 2 enables the watermark image (E).

Enabling the watermark image (E) means automatically displaying the watermark image (E) when a condition (a display condition) for displaying the watermark image (E) is satisfied. That is, when the display condition is not satisfied even when the watermark image (E) is enabled, the electronic blackboard 2 does not display the watermark image (E). The display condition is, for example, that a visual image is being input. Details of the display condition will be described later below.

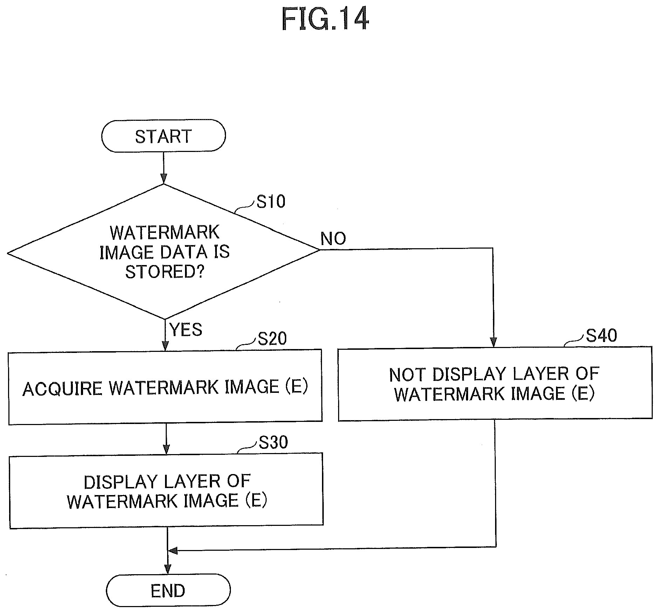

FIG. 14 is an example of a flowchart illustrating a control procedure of whether to enable or disable a watermark image (E) by the watermark image generating unit 38. For example, the process of FIG. 14 is executed at the time of activating the electronic blackboard 2 or executed periodically during activation.

First, the watermark image generating unit 38 determines whether watermark image data is being stored in the page data storage unit 300 via the page processing unit 37 (step S10). When watermark image data is being stored in a predetermined folder or directory of the page data storage unit 300, the page data storage unit 300 determines whether a file is present or absent in the predetermined folder or directory. Further, based on whether data of a predetermined extension (*.png) is being stored or whether data of a predetermined file name is being stored, the watermark image generating unit 38 may determine whether watermark image data is being stored in the page data storage unit 300.

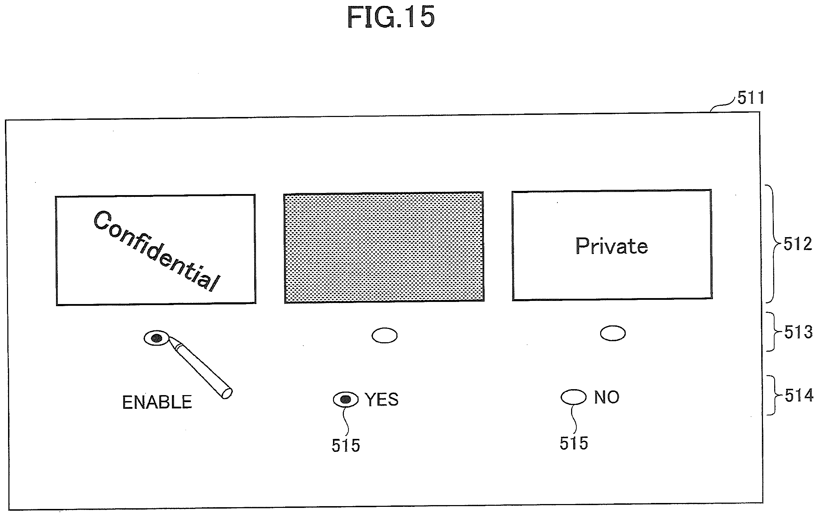

When the determination in step S10 is Yes, the watermark image generating unit 38 acquires the watermark image data from the page processing unit 37 via the page processing unit 37 (step S20). When there are a plurality of watermark images, for example, the watermark image generating unit 38 acquires watermark image data selected on the screen as illustrated in FIG. 15. In other words, the operation processing unit 26 displays a plurality of watermark images on the display 3, and receives one image selected from the plurality of watermark images as a watermark image to be used (displayed).

Then, the watermark image generating unit 38 enables the watermark image with respect to the layout managing unit 35 (step S30). Because the watermark image (E) is enabled, the layout managing unit 35 requests the display superimposing unit 36 to display the layer of the watermark image (E). Upon the watermark image generating unit 38 sending the watermark image to the display superimposing unit 36, the watermark image (E) is displayed on the display 3.

When the determination in step S10 is No, the watermark image generating unit 38 disables the layer of the watermark image (E) with respect to the layout managing unit 35 (step S40). Because the watermark image (E) is disabled, the layout managing unit 35 requests the display superimposing unit 36 not to display the layer of the watermark image (E). The watermark image (E) is not displayed on the display 3 even when the watermark image generating unit 38 outputs the watermark image to the display superimposing unit 36.

Note that the determination in FIG. 14 may be made not by the watermark image generating unit 38 but by the layout managing unit 35.

In this way, by automatically setting the watermark image to be enabled or disabled, it is unnecessary to set the watermark image (E) to be enabled when the user desires to display the watermark image (E). However, there may be a case in which the user does not want to display the watermark image. In this case, the user may delete the watermark image data from the page data storage unit 300, but this may be troublesome for the user. Therefore, it is useful for the user to be able to select enabling/disabling the watermark image as follows.

FIG. 15 is a diagram illustrating an example of an enabling/disabling setting screen 511 in which a watermark image is set to be enabled/disabled. The enabling/disabling setting screen 511 includes a reduced watermark image data field 512, a data selection button 513, an enabling setting field 514, and enabling setting buttons 515. For example, the enabling/disabling setting screen 511 is displayed by the UI image generating unit 33, upon the user performing a predetermined operation.

The user selects one set of watermark image data from a list of watermark image data. Because the data selection button 513 is an exclusive button, the user can select only one desired button (one watermark image). Further, when the user enables the watermark image, the user selects the enabling setting button 515 located near "YES". When the user disables the watermark image, the user selects the enabling setting button 515 located near "NO". The enabling setting buttons 515 are also exclusive buttons. In this way, the user can select a watermark image and can set whether to enable or disable it, on the display 3 of the electronic blackboard 2. Note that the selected watermark image data and the setting content as to whether to enable or disable it are stored in the page data storage unit 300.

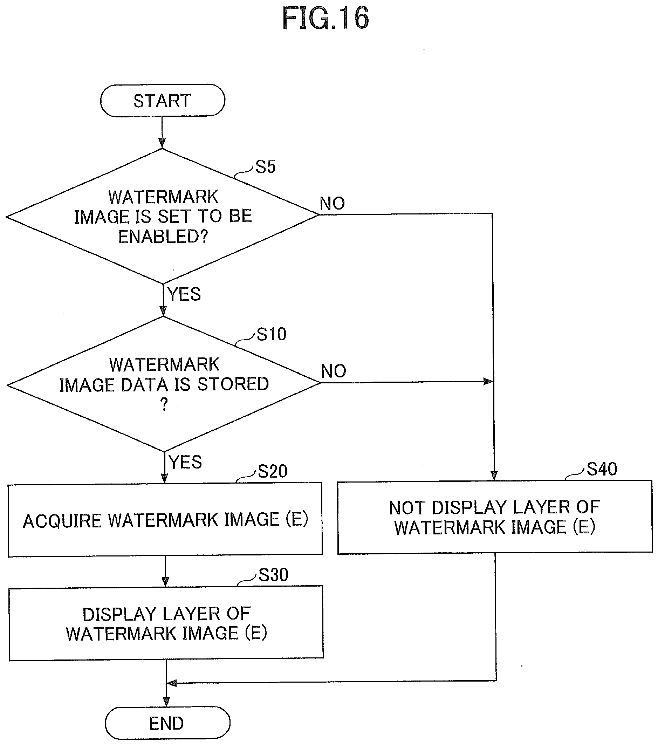

FIG. 16 is an example of a flowchart illustrating a control procedure of whether to enable or disable a watermark image (E) by the watermark image generating unit 38. In the description of FIG. 16, the difference from FIG. 14 will be described.

In FIG. 16, the watermark image generating unit 38 refers to the setting contents of the user stored in the page data storage unit 300 to determine whether a watermark image is set to be enabled (step S5) .

When the determination in step S5 is Yes, the process proceeds to step S10, and when the determination in step S5 is No, the process proceeds to step S40. Subsequently, processes similar to the processes of FIG. 14 are executed. Therefore, in a case where the user does not want to display a watermark image, the watermark image is not displayed even when watermark image data is stored in the page data storage unit 300. In a case where the user wants to display a watermark image, when watermark image data is stored in the page data storage unit 300, the watermark image data can be automatically displayed when the display condition is satisfied.

### <Switch between display and non-display of watermark image based on presence/absence of input of visual image>

As described above, when watermark image data is set to be enabled, the display superimposing unit 36 can display the watermark image (E) on the display 3. However, there may be a case where a watermarked image becomes an obstacle. Therefore, the layout managing unit 35 determines whether or not the display condition is satisfied, and switches the watermark image (E) to be displayed or hidden.

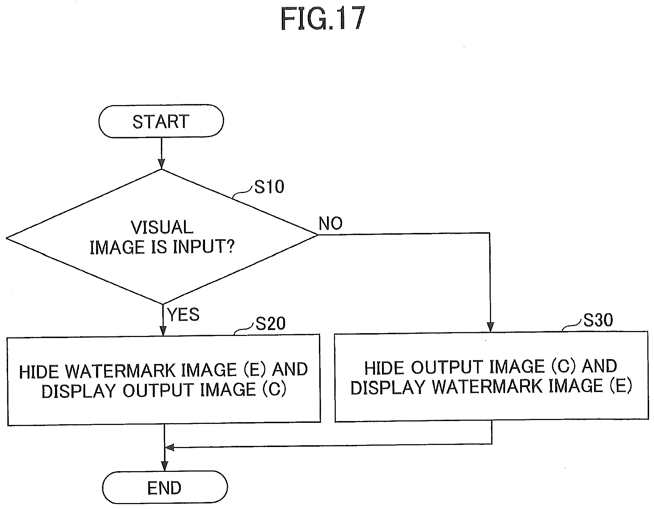

FIG. 17 is an example of a flowchart illustrating a procedure for switching a watermark image (E) to be displayed or hidden in accordance with the presence/absence of input of a visual image by the layout managing unit 35. The process of FIG. 17 is executed periodically, for example, when a watermark image is enabled.

First, the layout managing unit 35 determines whether a visual image is being input from the notebook PC 6 (step S10). The visual image from the notebook PC 6 is acquired by the visual image acquiring unit 21 and acquired by the image acquiring unit 31. The layout managing unit 35 inquires of the image acquiring unit 31 whether input of a visual image is present or absent. Alternatively, the layout managing unit 35 may inquire of the display superimposing unit 36 whether an output image (C) is being output from the image acquiring unit 31. Such determination may be in consideration of the convenience of description, and may be made based on whether the capturing device 111 detects a signal of a visual image.

Note that a case where a visual image is not being input means that the notebook PC 6 and the electronic blackboard 2 are not being connected via a visual image cable (such as D-Sub, HDMI (registered trademark), or DVI). Even when the notebook PC 6 is connected to the electronic blackboard 2 via a visual image cable, when a visual image cannot be input such as when the notebook PC 6 is powered off, it is determined that a visual image is not being input.

When the determination in step S10 is Yes, the layout managing unit 35 sends a notification to (requests) the display superimposing unit 36 to hide the layer of the watermark image (E) and to display the layer of the output image (C) (step S20). Note that the layer of the output image (C) is often displayed when the visual image is input, and a notification for displaying the layer of the output image (C) may be omitted.

When the determination in step S10 is No, the layout managing unit 35 sends a notification to (requests) the display superimposing unit 36 to display the layer of the watermark image (E) and hide the layer of the output image (C) (Step S30). Note that because the layer of the output image (C) is not displayed when a visual image is not being input, a notification for hiding the layer of the output image (C) may be omitted.

In this way, because the watermark image (E) is not displayed when the output image (C) is displayed, it is easy for the user to specify the visual image of the notebook PC 6 that the user wishes to obtain as a still image without being disturbed by the watermark image. When the output image (C) is not displayed, the watermark image (E) is displayed. Therefore, when "Confidential" is displayed, the user can grasp that the confidentiality of the stroke image (B) and the background image (D) is high. In addition, when a uniform watermark image is displayed, the user can view the stroke image (B) and the background image (D) with favorite hue and contrast.

### <Process of acquiring still image>

A process of acquiring a still image when a visual image is being input from the notebook PC 6 to the electronic blackboard 2 will be described.

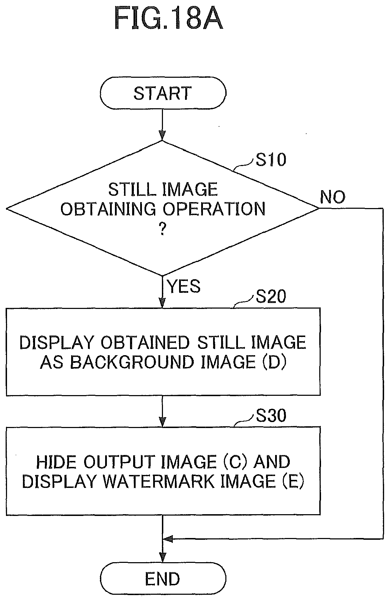

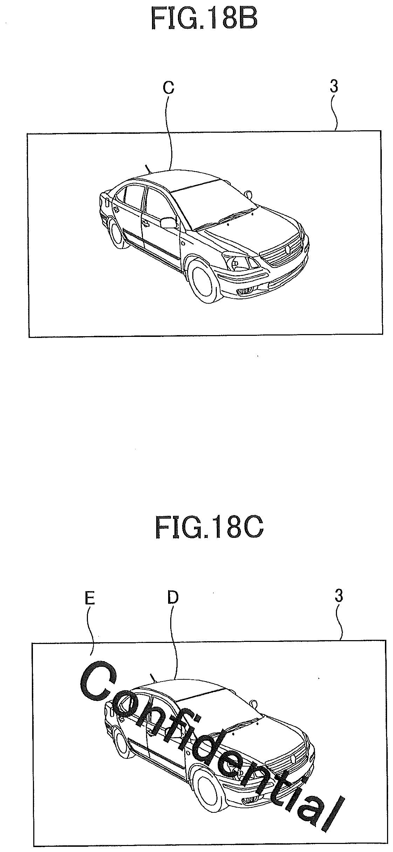

FIG. 18A is an example of a flowchart illustrating an operation when an operation of acquiring a still image is performed when a visual image is being input. FIGS. 18B and 18C are examples of images displayed on the display 3. Because a visual image is being input, at the time of staring the process of FIG. 18A, the watermark image (E) is not displayed. Note that for the sake of visibility, the UI image (A) and the stroke image (B) are not displayed.

First, the user operates the UI image (A) to perform an operation of obtaining a still image. The operation processing unit 26 receives this operation (step S10). FIG. 18B illustrates an output image (C) at the time of obtaining the still image.

What is acquired as a still image is the stroke image (B) and the output image (C). The UI image (A) is not to be acquired and the watermark image (E) is not being displayed (even if being displayed, the watermark image (E) is not to be obtained). Because the output image (C) is being displayed, the background image (D) is also not being displayed. The page processing unit 37 acquires the output image (C) from the image acquiring unit 31, acquires the stroke image (B) from the stroke processing unit 32, and stores the output image (C) and the stroke image (B) in the page data storage unit 300 as the background image (D). Further, because the background image (D) is acquired, the page processing unit 37 determines that the user wishes to view the background image (D), and sends the background image (D) to the background generating unit 34, and the background generating unit 34 sends the background image (D) to the display superimposing unit 36 (step S20).

Further, in order to prioritize the background image (D), the layout managing unit 35 sends a notification to the display superimposing unit 36 to hide the output image (C) and to display the layer of the watermark image (E) (step S30).

FIG. 18C illustrates the still image displayed as the background image (D) and the watermark image (E). In this way, after acquiring the still image (the background image (D)), the electronic blackboard 2 can again display the watermark image (E). Due to characters such as "Confidential", it is possible for the user to grasp that the confidentiality of the background image (D) is high even if the watermark image (E) is not displayed for the output image (C).

### <Transition after obtaining still image>

As illustrated in FIG. 18C, the visual image is being input from the notebook PC 6 while the background image (D) and the watermark image (E) are being displayed. After a fixed time period has passed, the process of FIG. 17 is executed again, and the display state of the display 3 switches from the state of displaying the background image (D) and the watermark image (E) to the state of displaying the output image (C). In order to switch the display state of the display 3 before the fixed time period has passed, the user may perform an operation of switching from the background image (D) and the watermark image (E) to the output image (C).

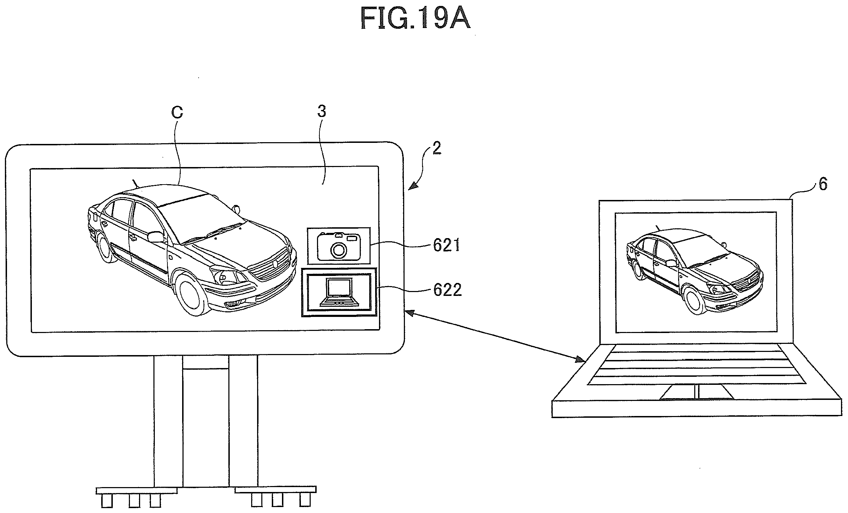

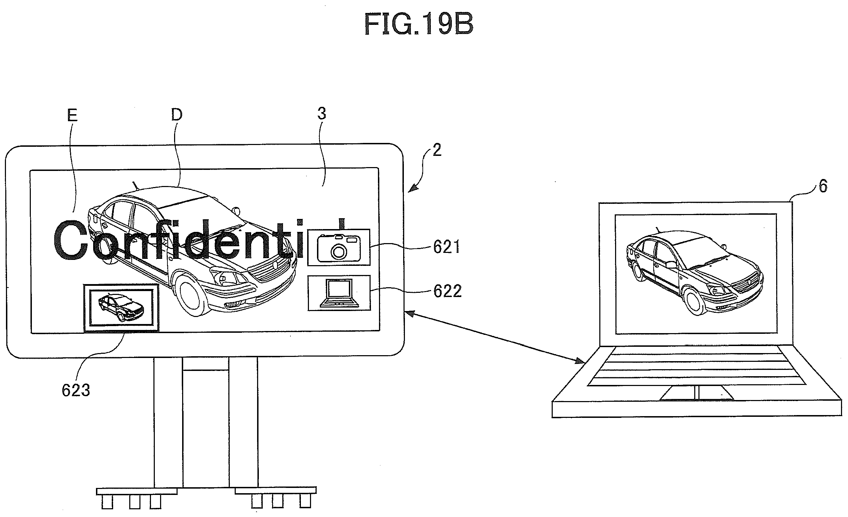

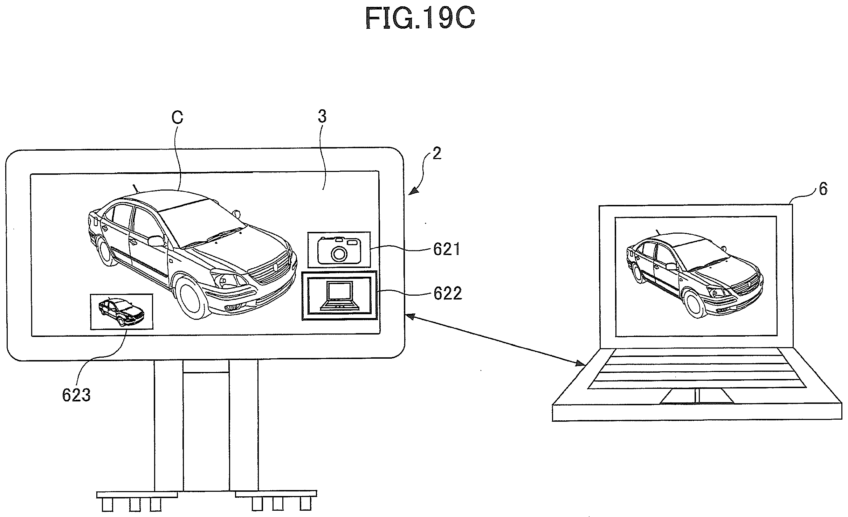

With reference to FIGS. 19, FIG. 19A illustrates an output image (C) when the electronic blackboard 2 displays a visual image of the notebook PC 6 on the full screen. When the electronic blackboard 2 is displaying the output image (C), a visual image icon 622 for obtaining the visual image of the notebook PC 6 is highlighted. For example, a frame of a predetermined color may be displayed on the visual image icon 622, or the frame may become thick, or blink.

Next, upon the user pushing a camera icon 621, as illustrated in FIG. 19B, the output image (C) is obtained as a still image. FIG. 19B illustrates a state at the end of FIG. 18A. That is, the background image (D) and the watermark image (E) are being displayed. Upon a still image being obtained, a new page is generated, and a thumbnail 623 is displayed at the bottom of the display 3. Further, because the output image (C) is not being displayed, the visual image icon 622 stops being highlighted. Further, because the currently displayed thumbnail 623 is highlighted, the user can grasp that it is the background image (D).

Upon the elapse of a fixed time period (for example, 30 seconds) in the state of FIG. 19B, the process of FIG. 17 starts. FIG. 19C illustrates a state in which the process of FIG. 17 is executed. The background image (D) and the watermark image (E) are switched to the output image (C). Therefore, the visual image icon 622 is highlighted. Further, because the currently displayed thumbnail 623 is not highlighted, the user can grasp that the image displayed on the display 3 is the output image (C).

As described above, in response to a predetermined operation performed by a user, the page processing unit 37 acquires (captures), as a still image, a second image (which is a visual image input from the notebook PC 6 to the electronic blackboard 2) being displayed on the display 3. After the predetermined operation is performed, the visual image superimposing unit 28 displays, on the display 3, the acquired still image and a first image (which is characters "Confidential") for a predetermined time period. After the predetermined time period has passed, the visual image superimposing unit 28 displays again the second image (which is a visual image input from the notebook PC 6 to the electronic blackboard 2).

In order to shift the display state of the display 3 to the state of FIG. 19C before the predetermined time period has elapsed in the state of FIG. 19B, the user may press the visual image icon 622.

### <When visual image is not being input>

When a visual image is not being input, the output image (C) is not displayed and the watermark image (E) is displayed. The display state of the display 3 is a state in which the stroke image (B) handwritten by the user is displayed and the background image (D) is also displayed. When a visual image is not being input, the user cannot perform an obtaining operation.

### <Variation example of switch between display and non-display of watermark image with respect to input of visual image>

In the process of FIG. 17, when a visual image is being input, a watermark image (E) is not displayed, and when a visual image is not being input, a watermark image (E) is displayed. Furthermore, the watermark image (E) may be switched to be displayed or hidden based on whether the visual image input from the notebook PC 6 to the electronic blackboard 2 is a moving image. In other words, whether or not a moving image is being input is a display condition.

FIG. 20 is a variation example of a flowchart illustrating a procedure for switching a watermark image (E) to be displayed or hidden in accordance with the presence/absence of input of a visual image by the layout managing unit 35. Note that in the description of FIG. 20, the difference from FIG. 17 will be mainly described.

When a visual image is being input (Yes in step S10), the layout managing unit 35 determines whether the visual image being input (input visual image) is a moving image (step S15). For example, this moving image may be a visual image that successively displays a series of images captured at a fixed time interval. Also, the moving image may be a visual image that changes with time upon the user operating the notebook PC 6. For example, in a case of switching screens or scrolling with browser software, the visual image is a moving image.

Whether the visual image is a moving image can be determined by difference calculation of the time series frames acquired by the image acquiring unit 31. In a case where performing difference calculation on all frames causes a high load, difference calculation may be performed only on a part of the frames.

When determining that the visual image is a moving image (Yes in step S15), the layout managing unit 35 sends a notification to (requests) the display superimposing unit 36 to hide the layer of the watermark image (E) and to display the layer of the output image (C) (step S20). Therefore, in this case, the image superimposing unit 28 displays the output image (C) without displaying the watermark image (E).

When determining that the visual image is not a moving image (No in step S15), the layout managing unit 35 sends a notification (requests) the display superimposing unit 36 to display both the layer of the watermark image (E) and the layer of the output image (C) (step S40). Therefore, in this case, the image superimposing unit 28 displays the watermark image (E) and the output image (C). More specifically, the display superimposing unit 36 superimposes the watermark image (E) with the output image (C), and the image superimposing unit 28 displays, on the display 3, the watermark image (E) and the output image (C) superimposed by the display superimposing unit 36. In other words, the visual image superimposing unit 28 displays the image obtained by superimposing the watermark image (E) and the output image (C).

When a moving image is input, which visual image the user wants to see cannot be determined, and a watermark image (E) may become an obstacle when searching for a visual image. According to the process of FIG. 20, the watermark image (E) can be hidden when a moving image is input. In other words, the user can view a plurality of images that constitute the moving image input from the notebook PC 6 without being hindered by the watermark image (E). Thereby, for example, the user can acquire (capture), at a desired timing (point in time), one image among the plurality of images. Also, when a still image is input, because the user can slowly view the visual image, the electronic blackboard 2 determines that the watermark image (E) is not so obstructive and displays the watermark image (E) and the output image (C). Therefore, the electronic blackboard 2 can be used such that while displaying the output image (C), when a visual image changes, the watermark image (E) is hidden, and upon the visual image stopping changing, the watermark image (E) is displayed. For example, upon the visual image stopping, characters "Confidential" can be displayed. Thus, even when a visual image is being input, when the visual image is a still image, the watermark image (E) can be displayed. In other words, when a visual image (an input visual image) input from the notebook PC 6 does not change on the display 3 for a predetermined time period or more, the image superimposing unit 28 may display, on the display 3, the watermark image (E) and the output image (C) in a superimposing manner. When a visual image (an input visual image) input from the notebook PC 6 changes on the display 3 at an interval less than the predetermined time period, the image superimposing unit 28 may display the output image (C) without displaying the watermark image (E).

### <Conclusion>

As described above, without a user's operation, the electronic blackboard 2 according to the preset embodiment can switch a watermark (E) between the display state and the non-display state based on whether an input of a visual image of the notebook PC 6 is present or absent.

### <Other application examples>

The best modes for carrying out the present invention have been described above with the embodiments; however, the present invention is not limited to the specific embodiments described herein, and variations and substitutions may be made without departing from the scope of the present invention.

For example, a watermark image is not limited to a uniform color or characters on a white background. Irrespective of information included in an image, the image may be a watermark image.

Although the case in which the notebook PC 6 is connected to the electronic blackboard 2 through a wire has been described in the embodiments described above, the notebook PC 6 may wirelessly input a visual image to the electronic blackboard 2. In this case, the presence/absence of input of a visual image is determined depending on whether a communication device such as a wireless LAN receives a visual image.

Furthermore, the embodiments can be applied not only to a case where the notebook PC 6 and the electronic blackboard 2 are connected or communicate in a one-to-one manner, but also to a case where communication is performed via a (wired or wireless) network.

Furthermore, the configuration example as in FIG. 4 or the like are is an example obtained by division according to main functions to facilitate the understanding of processes by the electronic blackboard 2. The present invention is not limited by how the processing units are divided or the names of the processing units. The processes of the electronic blackboard 2 may be further divided into many processing units according to the process contents. Furthermore, the processing units may be divided such that a single processing unit further includes many processes.

Note that the watermark image generating unit 38 is an example of a first image acquiring unit, the image acquiring unit 31 is an example of a second image acquiring unit, and the layout managing unit 35 is an example of an image determining unit, the display superimposing unit 36 is an example of an image superimposing unit, and the visual image superimposing unit 28 is an example of a display unit. Also, a watermark image is an example of a first image, and an output image is an example of a second image. The file input unit 42a is an example of an image obtaining unit, the operation processing unit 26 is an example of a transparency receiving unit, and the page processing unit 37 is an example of a still image acquiring unit.

It should be noted that an image processing apparatus according to the embodiments described above may be realized by a device memory, which stores at least one program, and at least one processor. The at least one processor executes the at least one program to execute a process as described in the embodiments. For example, the device memory and the at least one processor can implement functions as described in the embodiments. For example, the device memory and the at least one processor may be realized (implemented) by hardware elements as described in the embodiments. Here, the at least one program for causing a computer such as an image processing apparatus to execute a process may be stored in a non-transitory recording medium.

### [Description of the Reference Numeral]

- 2: electronic blackboard
- 3: display
- 4: electronic pen
- 30: image processing unit
- 31: image acquiring unit
- 33: UI image generating unit
- 34: background generating unit
- 35: layout managing unit
- 36: display superimposing unit
- 37: page processing unit
- 38: watermark image generating unit

### [Citation List]

### [Patent Document]

Patent Document 1: Japanese Unexamined Patent Application Publication No. 2013-210957

## Claims

1. An image processing apparatus (2) for displaying an input visual image input from an external device, the image processing apparatus (2) comprising:
a first image acquiring unit (31) configured to acquire a first image stored in a storage unit;
a visual image acquiring unit (21) configured to acquire the input visual image;
an image determining unit configured to determine that the input visual image is to be displayed without displaying the first image when the input visual image input from the external device is a moving image, configured to determine that the first image and the input visual image are to be displayed when the input visual image input from the external device is not a moving image, and configured to determine that the first image is to be displayed when the input visual image is not being input from the external device;
an image superimposing unit (28) configured to superimpose the first image on the input visual image when the image determining unit determines that the first image and the input visual image are to be displayed when the input visual image input from the external device is not a moving image; and
a display unit (3) configured to display, on a display part, the first image and the input visual image superimposed by the image superimposing unit.

2. The image processing apparatus (2) according to claim 1, wherein the first image acquiring unit (31) acquires the first image including information related to transparency at least partly.

3. The image processing apparatus (2) according to claim 1 or 2, further comprising:
an image obtaining unit configured to obtain, from outside, the first image including information related to transparency to store the first image in the storage unit.

4. The image processing apparatus (2) according to claim 2 or 3, wherein the first image includes a predetermined character or is a uniform color.

5. The image processing apparatus (2) according to any one of claims 2 to 4, further comprising:
a transparency receiving unit configured to receive setting of transparency of a part or an entirety of the first image.

6. The image processing apparatus (2) according to claim 5,
wherein the transparency receiving unit displays a plurality of images and receives, as the first image, one image selected from the plurality of images, and
wherein the first image acquiring unit (31) acquires, from the storage unit, the selected first image.

7. The image processing apparatus (2) according to any one of claims 1 to 6, further comprising:
a still image acquiring unit configured to acquire, when the input visual image is the moving image, a still image from the input visual image based on a predetermined operation,
wherein when the still image acquiring unit acquires the still image, the image determining unit determines that the first image is to be displayed together with the still image without displaying the input visual image even when the input visual image is input from the external device.

8. An image display method that is performed by an image processing apparatus (2) for displaying an input visual image input from an external device, the image display method comprising:
a step of acquiring, by a first image acquiring unit (31), a first image stored in a storage unit;
a step of acquiring, by a visual image acquiring unit (21), an input visual image;
a step of determining that the input visual image is to be displayed without displaying the first image when the input visual image input from the external device is a moving image, determining that the first image and the input visual image are to be displayed when the input visual image input from the external device is not a moving image, and determining that the first image is to be displayed when the input visual image is not being input from the external device;
a step of superimposing, by an image superimposing unit (28), the first image on the input visual image when the image determining unit determines that the first image and the input visual image are to be displayed when the input visual image input from the external device is not a moving image; and
a step of displaying, by a display unit (3) on a display part, the first image and the input visual image superimposed by the image superimposing unit.

9. A program for causing an image processing apparatus to execute the method according to the preceding claim.

## Patentansprüche

1. Bildverarbeitungsvorrichtung (2) zum Anzeigen eines visuellen Eingangsbildes, das von einer externen Vorrichtung eingegeben wird, wobei die Bildverarbeitungsvorrichtung (2) Folgendes umfasst:
eine erste Bilderfassungseinheit (31), die konfiguriert ist, ein erstes in einer Speichereinheit gespeichertes Bild zu erfassen;
eine Einheit zur Erfassung visueller Bilder (21), die konfiguriert ist, das visuelle Eingangsbild zu erfassen;
eine Bildbestimmungseinheit, die konfiguriert ist, zu bestimmen, dass das visuelle Eingangsbild ohne Anzeigen des ersten Bildes anzuzeigen ist, wenn das von der externen Vorrichtung eingegebene visuelle Eingangsbild ein Bewegtbild ist, konfiguriert ist, zu bestimmen, dass das erste Bild und das visuelle Eingangsbild anzuzeigen sind, wenn das von der externen Vorrichtung eingegebene visuelle Eingangsbild kein Bewegtbild ist, und konfiguriert ist, zu bestimmen, dass das erste Bild anzuzeigen ist, wenn das visuelle Eingangsbild nicht von der externen Vorrichtung eingegeben wird;
eine Bildüberlagerungseinheit (28), die konfiguriert ist, das visuelle Eingangsbild mit dem ersten Bild zu überlagern, wenn die Bildbestimmungseinheit bestimmt, dass das erste Bild und das visuelle Eingangsbild anzuzeigen sind, wenn das von der externen Vorrichtung eingegebene visuelle Eingangsbild kein Bewegtbild ist; und
eine Anzeigeeinheit (3), die konfiguriert ist, auf einem Anzeigeteil das erste Bild und das durch die Bildüberlagerungseinheit überlagerte visuelle Eingangsbild anzuzeigen.

2. Bildverarbeitungsvorrichtung (2) nach Anspruch 1, wobei die erste Bilderfassungseinheit (31) das erste Bild, das Informationen bezüglich der Transparenz enthält, zumindest teilweise erfasst.

3. Bildverarbeitungsvorrichtung (2) nach Anspruch 1 oder 2, das ferner Folgendes umfasst:
eine Bildgewinnungseinheit, die konfiguriert ist, das erste Bild, das Informationen bezüglich der Transparenz enthält, von außerhalb zu erlangen, um das erste Bild in der Speichereinheit zu speichern.

4. Bildverarbeitungsvorrichtung (2) nach Anspruch 2 oder 3, wobei das erste Bild ein vorbestimmtes Zeichen enthält und eine einheitliche Farbe ist.

5. Bildverarbeitungsvorrichtung (2) nach einem der Ansprüche 2 bis 4, das ferner Folgendes umfasst:
eine Transparenzempfangseinheit, die konfiguriert ist, eine Einstellung einer Transparenz eines Teils oder einer Gesamtheit des ersten Bildes zu empfangen.

6. Bildverarbeitungsvorrichtung (2) nach Anspruch 5,
wobei die Transparenzempfangseinheit mehrere Bilder anzeigt und als das erste Bild ein Bild, das aus den mehreren Bildern ausgewählt ist, empfängt, und
wobei die erste Bilderfassungseinheit (31) von der Speichereinheit das ausgewählte erste Bild erfasst.

7. Bildverarbeitungsvorrichtung (2) nach einem der Ansprüche 1 bis 6, das ferner Folgendes umfasst:
eine Standbilderfassungseinheit, die konfiguriert ist, dann, wenn das visuelle Eingangsbild das Bewegtbild ist, ein Standbild aus dem visuellen Eingangsbild anhand eines vorbestimmten Vorgangs zu erfassen,
wobei dann, wenn die Standbilderfassungseinheit das Standbild erfasst, die Bildbestimmungseinheit bestimmt, dass das erste Bild zusammen mit dem Standbild anzuzeigen ist, ohne das visuelle Eingangsbild anzuzeigen, selbst wenn das visuelle Eingangsbild von der externen Vorrichtung eingegeben wird.

8. Bildanzeigeverfahren, das durch eine Bildverarbeitungsvorrichtung (2) zum Anzeigen eines visuellen Eingangsbildes, das von einer externen Vorrichtung eingegeben wird, ausgeführt wird, wobei das Bildanzeigeverfahren Folgendes umfasst:
einen Schritt des Erfassens durch eine erste Bilderfassungseinheit (31) eines ersten in einer Speichereinheit gespeicherten Bildes;
einen Schritt des Erfassens eines visuellen Eingangsbildes durch eine Einheit zur Erfassung visueller Bilder (21);
einen Schritt des Bestimmens, dass das visuelle Eingangsbild ohne Anzeigen des ersten Bildes anzuzeigen ist, wenn das von der externen Vorrichtung eingegebene visuelle Eingangsbild ein Bewegtbild ist, des Bestimmens, dass das erste Bild und das visuelle Eingangsbild anzuzeigen sind, wenn das von der externen Vorrichtung eingegebene visuelle Eingangsbild kein Bewegtbild ist, und des Bestimmens, dass das erste Bild anzuzeigen ist, wenn das visuelle Eingangsbild nicht von der externen Vorrichtung eingegeben wird;
einen Schritt des Überlagerns durch eine Bildüberlagerungseinheit (28) des visuellen Eingangsbildes mit dem ersten Bild, wenn die Bildbestimmungseinheit bestimmt, dass das erste Bild und das visuelle Eingangsbild anzuzeigen sind, wenn das von der externen Vorrichtung eingegebene visuelle Eingangsbild kein Bewegtbild ist; und
einen Schritt des Anzeigens durch eine Anzeigeeinheit (3) auf einem Anzeigeteil des ersten Bildes und des durch die Bildüberlagerungseinheit überlagerten visuellen Eingangsbildes.

9. Programm zum Bewirken, dass eine Bildverarbeitungsvorrichtung das Verfahren nach dem vorhergehenden Anspruch ausführt.

## Revendications

1. Appareil de traitement d'image (2) destiné à afficher une image visuelle entrée depuis un dispositif externe, l'appareil de traitement d'image (2) comprenant :
une première unité d'acquisition d'image (31) conçue pour acquérir une première image stockée dans une unité de stockage ;
une unité d'acquisition d'image visuelle (21) conçue pour acquérir l'image visuelle entrée ;
une unité de détermination d'image conçue pour déterminer que l'image visuelle entrée doit être affichée sans afficher la première image lorsque l'image visuelle entrée depuis le dispositif externe est une image animée, conçue pour déterminer que la première image et l'image visuelle entrée doivent être affichées lorsque l'image visuelle entrée depuis le dispositif externe n'est pas une image animée, et conçue pour déterminer que la première image doit être affichée lorsque l'image visuelle entrée n'est pas entrée depuis le dispositif externe ;
une unité de superposition d'image (28) conçue pour superposer la première image sur l'image visuelle entrée lorsque l'unité de détermination d'image détermine que la première image et l'image visuelle entrée doivent être affichées lorsque l'image visuelle entrée depuis le dispositif externe n'est pas une image animée ; et
une unité d'affichage (3) conçue pour afficher, sur une partie d'affichage, la première image et l'image visuelle entrée superposées par l'unité de superposition d'image.

2. Appareil de traitement d'image (2) selon la revendication 1, dans lequel la première unité d'acquisition d'image (31) permet d'acquérir la première image comprenant des informations liées à la transparence au moins partielle.

3. Appareil de traitement d'image (2) selon la revendication 1 ou 2, comprenant en outre :
une unité d'obtention d'image conçue pour obtenir, depuis l'extérieur, la première image comprenant des informations liées à la transparence pour stocker la première image dans l'unité de stockage.

4. Appareil de traitement d'image (2) selon la revendication 2 ou 3, dans lequel la première image comprend un caractère prédéterminé ou constitue une couleur uniforme.

5. Appareil de traitement d'image (2) selon l'une quelconque des revendications 2 à 4, comprenant en outre :
une unité de réception de transparence conçue pour recevoir un réglage de transparence d'une partie ou de la totalité de la première image.

6. Appareil de traitement d'image (2) selon la revendication 5,
dans lequel l'unité de réception de transparence affiche une pluralité d'images et reçoit, en tant que première image, une image choisie parmi la pluralité d'images, et
dans lequel la première unité d'acquisition d'image (31) permet d'acquérir, depuis l'unité de stockage, la première image sélectionnée.

7. Appareil de traitement d'image (2) selon l'une quelconque des revendications 1 à 6, comprenant en outre :
une unité d'acquisition d'image fixe conçue pour acquérir, lorsque l'image visuelle entrée est l'image animée, une image fixe à partir de l'image visuelle entrée en fonction d'une opération prédéterminée,
dans lequel lorsque l'unité d'acquisition d'image fixe permet d'acquérir l'image fixe, l'unité de détermination d'image détermine que la première image doit être affichée conjointement avec l'image fixe sans afficher l'image visuelle entrée même lorsque l'image visuelle entrée est entrée depuis le dispositif externe.

8. Procédé d'affichage d'image qui est effectué par un appareil de traitement d'image (2) destiné à afficher une image visuelle entrée depuis un dispositif externe, le procédé d'affichage d'image comprenant :
une étape d'acquisition, par une première unité d'acquisition d'image (31), d'une première image stockée dans une unité de stockage ;
une étape d'acquisition, par une unité d'acquisition d'image visuelle (21), d'une image visuelle entrée ;
une étape consistant à déterminer que l'image visuelle entrée doit être affichée sans afficher la première image lorsque l'image visuelle entrée depuis le dispositif externe est une image animée, à déterminer que la première image et l'image visuelle entrée doivent être affichées lorsque l'image visuelle entrée depuis le dispositif externe n'est pas une image animée, et à déterminer que la première image doit être affichée lorsque l'image visuelle entrée n'est pas entrée depuis le dispositif externe ;
une étape consistant à superposer, par une unité de superposition d'image (28), la première image sur l'image visuelle entrée lorsque l'unité de détermination d'image détermine que la première image et l'image visuelle entrée doivent être affichées lorsque l'image visuelle entrée depuis le dispositif externe n'est pas une image animée ; et
une étape consistant à afficher, par une unité d'affichage (3) sur une partie d'affichage, la première image et l'image visuelle entrée superposées par l'unité de superposition d'image.

9. Programme destiné à amener un appareil de traitement d'image à effectuer le procédé selon la revendication précédente.
